(19) **Europäisches Patentamt European Patent Office Office européen des brevets**

(11) **EP 3 839 679 B1**

(12) **FASCICULE DE BREVET EUROPEEN**

(45) Date de publication et mention de la délivrance du brevet:
**29.06.2022 Bulletin 2022/26**

(21) Numéro de dépôt: **20215171.8**

(22) Date de dépôt: **17.12.2020**

(51) Classification Internationale des Brevets (IPC):
**G05B 19/418** (2006.01) **B23P 19/06** (2006.01)
**B25B 23/14** (2006.01) **B25F 5/00** (2006.01)

(52) Classification Coopérative des Brevets (CPC):
**G05B 19/41875; B25B 23/14; B25B 23/147; G01L 5/0042; G05B 19/41805; G05B 19/4183;** B23P 19/065; Y02P 90/02

(54) **PROCÉDÉ DE CONTRÔLE D'UN NIVEAU DE QUALITÉ DE VISSAGE D'UNE VISSEUSE, DISPOSITIF ASSOCIÉ ET PROGRAMME METTANT EN OEUVRE LE PROCÉDÉ**

VERFAHREN ZUR KONTROLLE EINES QUALITÄTSNIVEAUS DER VERSCHRAUBUNG EINES SCHRAUBERS, ENTSPRECHENDE VORRICHTUNG UND PROGRAMM ZUR UMSETZUNG DIESES VERFAHRENS

METHOD FOR CHECKING LEVEL OF SCREWING QUALITY OF A SCREWDRIVER, ASSOCIATED DEVICE AND PROGRAMME IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914948**

(43) Date de publication de la demande:
**23.06.2021 Bulletin 2021/25**

(73) Titulaire: **ETABLISSEMENTS GEORGES RENAULT**
**44800 Saint Herblain (FR)**

(72) Inventeur: **JOUSSET, Nicolas**
**44220 Coueron (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A2- 0 264 034     DE-A1- 19 944 717**
**US-A- 4 894 767**

## Description

### Domaine de l'invention

Le domaine de l'invention est celui de l'outillage industriel, et notamment des outillages prévus pour exercer un vissage avec un ou plusieurs couples déterminés.

L'invention concerne plus précisément le contrôle de la qualité du travail effectué par de tels outillages, par exemple pour identifier un défaut ou un état d'usure de l'outil, et le cas échéant déclencher l'émission d'une alerte.

### Art antérieur et ses inconvénients

Dans le domaine de la production industrielle, d'automobiles ou d'avions par exemple, les outils de vissage sont très largement utilisés. Ces outils, qui peuvent être fixes ou portatifs (et dans ce cas équipés de batteries), intègrent des moteurs, notamment électriques ou pneumatiques selon les applications envisagées. Ces outils peuvent être connectés (par radio ou de façon filaire) à un contrôleur (qui se présente par exemple sous la forme d'un coffret) permettant de piloter différents cycles de fonctionnement.

Généralement, le vissage est asservi et l'outil effectue une mesure du couple appliqué sur la vis par la visseuse. Cette mesure est transmise au contrôleur qui vérifie que sa valeur se situe dans les limites prévues par la recette de vissage. De cette manière, le contrôleur peut déclencher l'arrêt du travail lorsque la mesure du couple atteint une valeur de seuil. Les résultats de vissage peuvent être enregistrés sur des bases de données qualité, pour un traitement a posteriori, et/ou utilisés par l'opérateur pour vérifier si le serrage est correct ou non.

Le contrôleur permet notamment d'assurer une traçabilité des opérations effectuées par l'outil, en assurant par exemple l'enregistrement de résultats tels que le couple final de vissage, la vitesse de vissage l'angle final de vissage, la date et l'heure des opérations ou encore les tables représentatives de la qualité (bonne ou mauvaise, en fonction de paramètres prédéterminés) du vissage effectué.

La mesure faite par le capteur équipant l'outil est une image du couple appliqué sur la vis. Cette mesure est impactée par différents éléments de transmission qui ajoutent un bruit sur le signal mesuré. La visseuse comprend au moins les éléments suivants :

- un moteur ;
- un ou plusieurs trains épicycloïdaux ayant pour but d'augmenter le couple produit par le moteur ; et
- un capteur de couple.

Il peut également comprendre d'autres éléments, notamment un renvoi d'angle.

Tous ces éléments peuvent venir perturber le signal du capteur, qui n'est alors plus une image parfaite du couple appliqué à la vis. Ce bruit peut par exemple provoquer un arrêt ne correspondant pas à la consigne d'arrêt prédéfinie, et donc entraîner de mauvais vissages alors que la visseuse renvoie un compte-rendu positif. De plus, la dégradation des éléments de transmission peut entrainer une augmentation des bruits sur le signal mesuré. Cette augmentation du bruit génère une diminution des performances de l'outil (dégradation de la précision).

Il est donc souhaitable de contrôler la précision de ces moyens de vissage et du bon état de fonctionnement des outils, que ce soit pour le contrôle et/ou le suivi des paramètres de vissage ou pour la bonne exécution de ces paramètres.

En d'autres termes, la fiabilité des outils doit pouvoir être vérifiée, et ceci régulièrement durant toute la durée d'utilisation des outils, de façon à pouvoir effectuer une maintenance, de préférence préventive. On cherche ainsi à éviter, ou à tout le moins réduire, notamment les états d'usure conduisant à une mauvaise qualité de vissage et/ou à la casse des outils sur la ligne de production, nécessitant alors l'arrêt de cette ligne pour le remplacement de l'outil. Ceci nuit bien entendu au rendement global de la ligne de production concernée.

Il est connu d'appliquer une maintenance préventive qui consiste à comptabiliser le nombre d'utilisations de l'outil (nombre de vissage, ou temps cumulé d'utilisation) et de comparer la valeur de ce compteur avec des préconisations produites par les fournisseurs d'outils, ces préconisations se traduisant par une périodicité d'entretien. Cette méthode procède à une approche empirique qui fournit une estimation statistique de l'usure d'un outil mais ne donne pas réellement son état actuel.

Il est également connu d'effectuer des contrôles réguliers, sur banc de test. Ces contrôles nécessitent un arrêt de la production, l'outil étant déplacé sur le banc de test, généralement dans un site distinct de celui de la production. Ceci entraîne un ralentissement de la production et/ou la mise en œuvre d'outils de remplacement.

La norme ISO5393 prévoit ainsi que l'on effectue au moins 25 vissages de test, pour contrôler un outil de vissage.

Les contrôles peuvent être effectués de différentes manières. Par exemple, le document FR2882287 décrit un outil de vissage comprenant un organe rotatif monté sur un corps et un capteur de mesure du couple de serrage. La mesure du couple fournit des éléments permettant de déterminer l'état d'usure des organes. Plus précisément, ce document enseigne de traiter un spectre de fréquences afin d'extraire au moins une fréquence vibratoire associée à un organe rotatif, cette fréquence est ensuite comparée avec une fréquence de référence en vue de déterminer l'état d'usure de l'organe rotatif considéré.

Ceci permet d'identifier d'éventuelles défectuosités que présente la visseuse mais non un niveau de précision de serrage.

Il existe donc, selon les applications et/ou les outils :

- un besoin pour mettre en œuvre une technique de contrôle de fonctionnement d'un outil de vissage afin de déterminer si le travail effectué entre dans une plage déterminée de paramètres, ou en d'autres termes, la qualité du travail, sans introduire d'interruption de la production,
- un besoin pour qu'une telle détermination soit précise,
- un besoin de fournir une alerte permettant en temps réel de prévenir l'utilisateur de l'incapacité de l'outil à réaliser correctement un vissage, par exemple lors de l'utilisation d'une visseuse sur une chaine d'assemblage, et/ou
- un besoin de fourniture rapide d'une estimation de la dispersion et de l'écart par rapport à un objectif de serrage. C'est-à-dire d'une manière plus rapide et plus simple que les tests actuellement effectués (par exemple selon la norme ISO5393).

Un procédé apportant une réponse à au moins certains de ces besoins est décrit dans le document FR3088229.

Cependant, cette technique, décrite plus en détail par la suite, peut être difficile à mettre en pratique. Elle nécessite la réalisation de mesures sur une plage angulaire suffisante, par exemple de l'ordre de 720°, qui est souvent supérieure à l'angle couvert par un vissage unique. Il est proposé de concaténer plusieurs vissages, pour atteindre une plage angulaire suffisante. Cependant, en pratique, il n'est pas possible de concaténer directement des mesures issues de plusieurs vissages : le procédé nécessite de disposer de données représentatives d'un signal présentant une périodicité suffisante pour effectuer efficacement les traitements.

La présente invention vise notamment à apporter une solution simple et efficace à cette exigence.

Le document EP 0 264 034 A2 divulgue un procédé de surveillance d'un vissage.

## Exposé de l'invention

Dans un mode de réalisation de l'invention, il est proposé un procédé de contrôle d'un niveau de qualité de vissage d'une visseuse par rapport à un objectif de vissage prédéterminé. Un tel procédé tient compte d'une série de données représentatives de la montée en couple d'au moins deux vissages de vis à une fréquence angulaire prédéterminée. Le procédé de contrôle comprend les étapes suivantes :

- obtention d'une sous-série de données pour chacun des vissages, à partir d'une sous-série de mesures correspondante ;
- agrégation optimisée des sous-séries, pour former la série de données, comprenant une étape de suppression de données correspondant à un nombre de mesures déterminé selon un critère d'optimisation de périodicité ; et
- analyse de la série de données, délivrant ladite au moins une information représentative d'une dispersion et/ou d'un écart par rapport à l'objectif de vissage, résultant de perturbations induites par la visseuse.

En particulier, le procédé de contrôle comprend les étapes suivantes :

- obtention, à une fréquence angulaire prédéterminée, de la série de doublets représentative de la montée en couple du vissage d'au moins une vis vissée par la visseuse, constituant une première table de valeurs, chaque doublet comprenant une valeur d'angle et une valeur de couple ;
- détermination, à partir de la première table de valeurs, d'une deuxième table de valeurs présentant le couple en fonction de l'angle, et représentative de la caractéristique vraie de l'au moins une vis ;
- détermination d'une troisième table de valeurs présentant le couple en fonction de l'angle et représentative des perturbations induites par la visseuse lors de la montée en couple du vissage d'au moins une vis, à partir des première et deuxième tables.

Les étapes d'obtention d'une série de doublets, de détermination d'une deuxième table et de détermination d'une troisième table sont mises en œuvre pour au moins un premier et un deuxième vissages de vis par la visseuse, délivrant au moins deux troisième tables correspondantes, dites troisièmes tables de vissage unitaire. Le procédé de contrôle comprend une étape d'agrégation optimisée d'au moins deux troisièmes tables de vissage unitaire comprenant une étape de suppression, dans au moins l'une des troisièmes tables de vissage unitaire, d'un nombre de valeurs déterminé selon un critère d'optimisation de périodicité, l'étape d'agrégation optimisée délivrant une troisième table agrégée candidate. Le procédé de contrôle comprend une étape d'analyse d'une troisième table agrégée tenant compte de la troisième table agrégée candidate, délivrant au moins une information représentative d'une dispersion et/ou d'un écart par rapport à l'objectif de vissage, résultant de perturbations induites par la visseuse. Ainsi, l'invention permet de déterminer des paramètres représentatifs d'une perturbation (liée par exemple à l'engrènement des dentures, aux perturbations électriques des signaux...) à partir d'au moins deux vissages. Une telle perturbation se caractérise notamment par une oscillation du signal autour de sa valeur réelle, à des fréquences et amplitudes variables. Connaissant la perturbation, il est ainsi possible de déterminer des valeurs de dispersion de l'outil ainsi qu'un défaut de calibration résultant de cette perturbation. Par ailleurs, la présente technique permet une détermination précise des valeurs en question. L'agrégation optimisée permet en effet une analyse des mesures sur une durée plus longue et donc une meilleure résolution d'analyse au final.

Il est également possible de calculer ce que seraient la dispersion et/ou l'écart par rapport à l'objectif sur une vis présentant une raideur autre que celle sur laquelle le vissage a été effectué. Ces valeurs permettent de déterminer rapidement si l'outil est toujours capable ou non d'effectuer le travail dans des conditions requises, et le cas échéant, de déclencher un signal d'alerte pour le réparer ou le changer.

L'approche de l'invention est non seulement plus rapide, mais elle permet surtout un traitement en temps réel, et directement sur chaine, contrairement aux solutions de l'art antérieur.

Le terme « table » fait référence, dans la présente description et dans les revendications, à des ensembles, ou séries, de doublets de valeurs de type (x, y). Ces ensembles peuvent, le cas échéant, être représentés et/ou enregistrés sous des formes différentes (tables de données, équations...).

Dans des modes de réalisation, l'étape d'agrégation optimisée comprend une concaténation d'une part, d'une troisième table du premier vissage et, d'autre part, d'une version tronquée d'une troisième table du deuxième vissage, dite troisième table tronquée, délivrant une table agrégée intermédiaire. La troisième table tronquée résulte d'une suppression, dans la troisième table du deuxième vissage, d'un nombre donné de valeurs successives correspondant à des angles d'amplitude minimale parmi les valeurs de la troisième table du deuxième vissage. La suppression, dans la troisième table du deuxième vissage, et la concaténation répétée pour différentes valeurs du nombre donné délivrent un jeu de tables agrégées intermédiaires comprenant la troisième table agrégée candidate.

Dans des modes de réalisation, l'étape d'agrégation optimisée comprend une concaténation d'une part, d'une version tronquée d'une troisième table du premier vissage, dite troisième table tronquée et, d'autre part, d'une troisième table du deuxième vissage, délivrant une table agrégée intermédiaire. La troisième table tronquée résulte d'une suppression, dans la troisième table du premier vissage, d'un nombre donné de valeurs successives correspondant à des angles d'amplitude maximale parmi les valeurs de la troisième table du premier vissage. La suppression, dans la troisième table du premier vissage, et la concaténation répétée pour différentes valeurs du nombre donné délivrant un jeu de tables agrégées intermédiaires comprenant la troisième table agrégée candidate.

Ainsi, différentes combinaisons de concaténation des deux troisièmes tables sont obtenues avec, pour chaque combinaison, une suppression d'un nombre différent de valeurs au début de la troisième table associées au deuxième vissage.

Dans des modes de réalisation, l'étape d'agrégation optimisée comprend :

- une autocorrélation de chaque table agrégée intermédiaire du jeu de tables agrégées intermédiaires délivrant un jeu correspondant de tables agrégées intermédiaires autocorrélées ; et
- un moyennage de chacune des tables agrégées intermédiaires autocorrélées délivrant un jeu correspondant de valeurs moyennées.

Une table agrégée intermédiaire dont la valeur moyennée correspondante est maximale parmi les valeurs moyennées est sélectionnée comme étant la troisième table agrégée candidate selon le critère d'optimisation de périodicité.

Ainsi, la troisième table agrégée candidate correspond à la table agrégée intermédiaire présentant la plus grande régularité (au sens de l'autocorrélation) parmi les différentes tables du jeu de tables agrégées intermédiaires. De la sorte, les résultats d'une analyse basée par exemple sur une mise en œuvre d'une transformée de Fourier sont améliorées, les discontinuités de la table analysée étant minimisées.

Dans des modes de réalisation, lorsque plusieurs tables agrégées intermédiaires, dites tables agrégées intermédiaires candidates, ont une valeur moyennée de même valeur maximale parmi les valeurs moyennées, une table agrégée intermédiaire correspondant à la suppression d'un nombre minimal de valeurs successives, lors de la mise en œuvre de la suppression dans la troisième table du deuxième vissage, est sélectionnée parmi les tables agrégées intermédiaires candidates comme étant la troisième table agrégée candidate selon le critère d'optimisation de périodicité.

Ainsi, un nombre maximum de valeurs est obtenu dans la troisième table agrégée candidate de sorte à permettre une meilleure résolution d'analyse de la table en question.

Dans des modes de réalisation, l'étape d'agrégation optimisée comprend :

- une corrélation entre, d'une part, la troisième table du premier vissage et, d'autre part, la troisième table du deuxième vissage, délivrant une fonction de corrélation ; et
- une détermination d'au moins une valeur d'angle maximisant la fonction de corrélation.

Le critère d'optimisation de périodicité correspond à la suppression, dans la troisième table du premier vissage, d'un nombre de valeurs successives, dit nombre optimisé, tenant compte d'une valeur d'angle parmi la ou les valeurs d'angles maximisant la fonction de corrélation.

Ainsi, la troisième table agrégée est, au final, obtenue avec un nombre de calculs limité.

Dans des modes de réalisation, lorsque plusieurs valeurs d'angles maximisent la fonction de corrélation, le nombre optimisé est fonction d'une valeur d'angle maximale parmi les valeurs d'angles maximisant la fonction de corrélation.

Ainsi, un nombre maximum de valeurs est obtenu dans la troisième table agrégée de sorte à permettre une meilleure résolution d'analyse de la table en question.

Dans des modes de réalisation, l'étape d'agrégation optimisée comprend une concaténation d'une part, d'une version tronquée de la troisième table du premier vissage, dite troisième table tronquée et, d'autre part, de la troisième table du deuxième vissage, la concaténation délivrant une troisième table agrégée candidate. La troisième table tronquée résulte d'une suppression, dans la troisième table du premier vissage, du nombre optimisé de valeurs successives correspondant à des angles d'amplitude maximale parmi les valeurs de la troisième table du premier vissage.

Ainsi, la concaténation optimisée des deux troisièmes tables est obtenue via une suppression, à la fin de la troisième table associée au premier vissage, d'un nombre de valeurs égal au nombre optimisé.

Dans des modes de réalisation, le procédé de contrôle comprend un test du nombre total de valeurs de la troisième table agrégée candidate. Il est décidé que la troisième table agrégée candidate est la troisième table agrégée lorsque le nombre total de valeurs de la troisième table agrégée candidate est supérieur à un seuil prédéterminé.

Ainsi, le nombre de valeurs de la troisième table agrégée est suffisant pour pouvoir obtenir une bonne résolution d'analyse des défauts de la visseuse.

Dans des modes de réalisation, le procédé de contrôle comprend lorsque le nombre total de valeurs de la troisième table agrégée candidate est inférieur au seuil prédéterminé :

- une nouvelle mise en œuvre des étapes d'obtention d'une série de doublets, de détermination d'une deuxième table et de détermination d'une troisième table pour un nouveau vissage de vis par la visseuse, délivrant une nouvelle troisième table correspondante ; et
- une nouvelle mise en œuvre de l'étape d'agrégation optimisée entre la troisième table agrégée candidate et la nouvelle troisième table, délivrant une nouvelle troisième table agrégée candidate.

Ainsi, lorsque le nombre de valeurs de la troisième table agrégée n'est pas suffisant pour pouvoir effectuer une analyse fine des défauts de la visseuse, une nouvelle agrégation optimisée est mise en œuvre dans le but d'obtenir un nombre de valeurs suffisant.

L'invention concerne également un programme d'ordinateur comprenant des instructions de code de programme pour la mise en œuvre du procédé de contrôle décrit ci-dessus (selon l'un quelconque des différents modes de réalisation précités), lorsqu'il est exécuté sur un ordinateur et/ou par un microprocesseur.

L'invention concerne également une visseuse comprenant des moyens configurés pour mettre en œuvre le procédé de contrôle décrit ci-dessus (selon l'un quelconque des différents modes de réalisation précités).

Ainsi, les caractéristiques et avantages de cette visseuse sont les mêmes que ceux du procédé décrit précédemment. Par conséquent, ils ne sont pas détaillés plus amplement.

Selon une autre approche, par exemple lorsque l'outil ne dispose pas d'une puissance de traitement suffisante, tout ou partie du procédé peut être mis en œuvre dans un concentrateur ou un serveur avec lequel l'outil communique. Dans cette approche, les mesures sont relevées par l'outil, puis transmises au concentrateur ou au serveur qui effectue les différentes opérations du procédé de contrôle.

**Liste des figures**

D'autres buts, caractéristiques et avantages de l'invention apparaîtront plus clairement à la lecture de la description suivante, donnée à titre de simple exemple illustratif, et non limitatif, en relation avec les figures, parmi lesquelles :

**[Fig. 1]** est une vue en coupe d'outil intégré à un ensemble d'outillage selon l'invention ;
**[Fig. 2]** est un diagramme fonctionnel d'un outillage selon l'invention ;

**[Fig. 3]** présente sur un exemple de schéma les variations de couple de serrage en fonction du nombre de serrages effectués par un même outil ;

**[Fig. 4]** présente un ordinogramme des principales étapes pour la mise en œuvre d'un procédé de contrôle d'un niveau de qualité selon une première mise en œuvre;

**[Fig. 5a]** présente un exemple de caractéristique linéaire d'une raideur donnée, selon la première mise en œuvre;

**[Fig. 5b]** présente un exemple d'une courbe représentative de la première relation, selon la première mise en œuvre;

**[Fig. 5c]** présente un exemple d'une courbe représentative de la seconde relation, selon la première mise en œuvre;

**[Fig. 5d]** présente un exemple d'une courbe représentative de la troisième relation, selon la première mise en œuvre;

**[Fig. 6a]** présente un exemple d'une courbe représentative de la première table, selon une deuxième mise en œuvre;

**[Fig. 6b]** présente un exemple d'une courbe représentative de la deuxième table, selon la deuxième mise en œuvre;

**[Fig. 6c]** présente un exemple d'une courbe représentative d'une table intermédiaire, illustrant le fait que l'outil s'arrête toujours au niveau d'un maximum, selon la deuxième mise en œuvre; **[Fig. 6d]** présente un exemple d'une courbe représentative de la troisième table, selon la deuxième mise en œuvre;

**[Fig. 7]** présente un ordinogramme des principales étapes pour la mise en œuvre du procédé de contrôle d'un niveau de qualité selon un premier mode de réalisation de l'invention ;

**[Fig. 8a]** présente un exemple de deux courbes représentatives de deux premières tables obtenues pour deux vissages de vis par la visseuse de la Fig. 1, selon le premier mode de réalisation ;

**[Fig. 8b]** présente un exemple de deux courbes représentatives de deux troisièmes tables correspondant aux deux courbes de la Fig. 8a, selon le premier mode de réalisation ;

**[Fig. 8c]** présente un exemple de courbes représentatives d'un jeu de tables agrégées intermédiaires obtenues à partir des deux courbes de la Fig. 8b, selon le premier mode de réalisation ;

**[Fig. 9]** présente un ordinogramme des principales étapes pour la mise en œuvre du procédé de contrôle d'un niveau de qualité selon un deuxième mode de réalisation ;

**[Fig. 10a]** présente un exemple d'une version tronquée de courbe représentative de la troisième table obtenue pour un premier vissage de vis par la visseuse de la Fig. 1, selon le deuxième mode de réalisation ;

**[Fig. 10b]** présente un exemple d'une version décalée de courbe représentative de la troisième table obtenue pour un deuxième vissage de vis par la visseuse de la Fig. 1, selon le deuxième mode de réalisation ;

**[Fig. 10c]** présente un exemple de courbe représentative de la troisième table agrégée candidate obtenue par concaténation optimisée des courbes de la Fig. 10a et de la Fig. 10b, selon le deuxième mode de réalisation.

## Description détaillée de modes de réalisation de l'invention

Sur toutes les figures du présent document, les éléments et étapes identiques sont désignés par une même référence.

Le principe général de la technique décrite repose sur le calcul de ce que serait la dispersion d'un outil de vissage, ou visseuse, et son écart moyen par rapport à l'objectif de serrage à partir des perturbations détectées sur le signal produit par son capteur de couple. Plus précisément, l'invention concerne une technique de mise en œuvre de la technique décrite dans le document FR3088229 et présentée ci-après (§ 5.3), permettant de prendre en compte au moins deux séries de mesures correspondant à des vissages distincts.

*5.1 exemple d'outil mettant en œuvre la technique de l'invention*

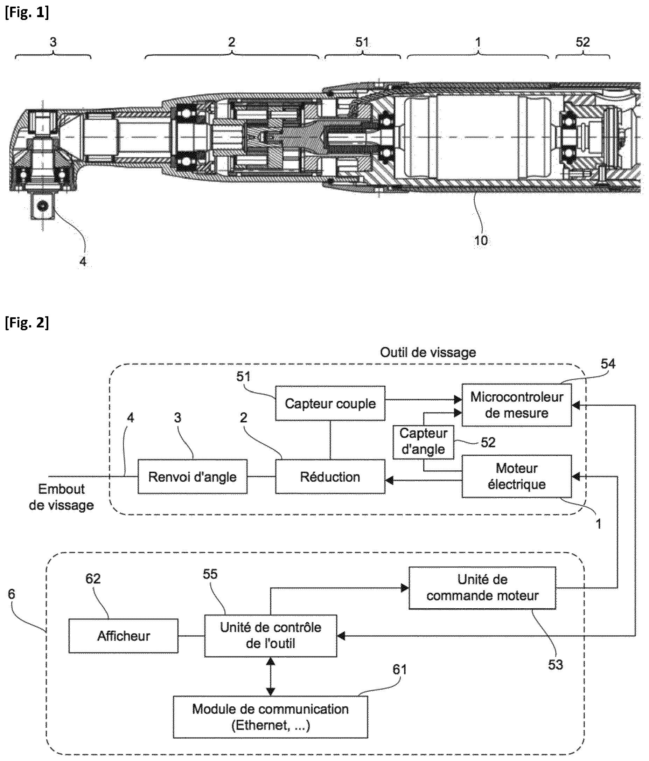

En référence à la **Fig. 1**, un outil de vissage selon le présent mode de réalisation comprend un moteur 1 monté dans le corps 10 de l'outil, la sortie moteur étant couplée à un ensemble d'engrènement, ou réducteur, 2, formé de trains épicycloïdaux, lui-même couplé à un engrènement de renvoi d'angle 3 (l'axe de vissage étant ici perpendiculaire à l'axe moteur ; le renvoi d'angle 3 peut être absent dans le cas d'un autre mode de réalisation envisageable selon lequel l'axe de vissage et l'axe moteurs sont coaxiaux) destiné à entraîner en rotation une tête de vissage présentant un embout 4 prévu pour recevoir une douille de vissage.

De façon connue en soi, un capteur de couple 51 (par exemple un pont de jauges de contraintes) délivre des informations relatives au couple de serrage exercé par l'outil. Un capteur d'angle 52 est également prévu, à l'arrière du moteur. Il peut par exemple comprendre un aimant tournant devant un capteur à effet Hall porté par une carte électronique.

Sur le diagramme fonctionnel de la **Fig. 2**, les organes mécaniques sont cette fois représentés sous forme schématique de façon à faire apparaître le moteur 1, le réducteur 2 et le renvoi d'angle 3.

Tel qu'illustré, le capteur de couple 51 est relié à un microcontrôleur de mesure 54 qui transmet les données à une unité de contrôle 55 de l'outil.

En fonction des données fournies par le capteur de couple 51, une unité de contrôle 55 pilote le fonctionnement du moteur 1 par l'intermédiaire d'une unité de commande 53.

L'unité de contrôle 55 intègre en outre des moyens de traitement du signal fourni par le capteur 51 de couple pour délivrer au moins une information représentative d'une dispersion et/ou d'un écart par rapport audit objectif de vissage, résultant de perturbations générées par la visseuse. Selon le présent mode de réalisation, l'unité de contrôle 55 et l'unité de commande 53 sont intégrées dans une unité 6, désignées par le terme de « contrôleur de vissage » sur la figure 2.

Le contrôleur 6 de vissage comprend ou peut être formé par un microprocesseur ou microcontrôleur, mettant en œuvre un programme, stocké dans une mémoire interne ou externe, permettant notamment d'exécuter les étapes du procédé de l'invention, par exemple selon les modes de réalisation décrits par la suite. Il peut intégrer ou contrôler en outre :

- un module de communication 61 permettant de relier le contrôleur 6 à un réseau d'échanges d'information, par exemple de type Ethernet ;
- un afficheur 62.

Ainsi, lorsque le contrôleur 6 détecte que des valeurs de dispersion ou d'écart par rapport à la consigne ne répondent plus aux exigences de production, un signal et/ou un message d'alerte est affiché sur l'afficheur 62, et éventuellement envoyé à un poste distant par l'intermédiaire du module de communication.

Dans le cas d'un outil à batterie, les fonctions de contrôle de l'outil 55 et de commande de moteur 53 peuvent être intégrées dans l'outil.

Selon un mode de réalisation, un tel message peut indiquer l'organe défaillant concerné, par exemple par comparaison de la dispersion individuelle par rapport à des valeurs seuils ou un pourcentage de la dispersion, et peut également préciser le type de maintenance et/ou d'entretien à effectuer.

On rappelle que le couple de vissage est déterminé à partir d'une tension transmise par le capteur 5 de couple.

*5.2 contrôle d'un niveau de qualité du vissage*

Après avoir détaillé par des exemples les principaux dispositifs pour la mise en œuvre de l'invention, nous allons maintenant expliciter comment ceux-ci coopèrent dans le cadre d'un procédé de contrôle d'un niveau de qualité de vissage d'un outil.

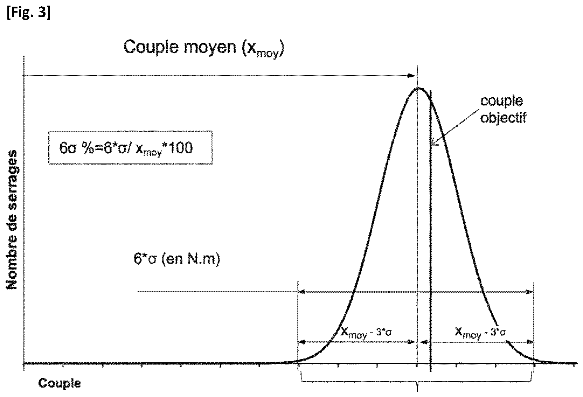

La courbe de la **Fig. 3** illustre les variations de couple de serrage en fonction du nombre de serrages mesurés. Cette courbe est élaborée à partir de plusieurs mesures (par exemple de 25 à 100) permettant de réaliser des études statistiques sur le comportement d'un outil. L'exploitation des résultats donne notamment les deux données suivantes :

- la dispersion des serrages de l'outil, caractérisée par un écart-type ($\sigma$), informant sur la capacité de l'outil à reproduire un couple avec précision. La dispersion est en général exprimée comme 6 fois l'écart type divisé par la moyenne en pourcentage ;
- l'écart par rapport à l'objectif, évalué en calculant la différence entre la moyenne et l'objectif, divisée par l'objectif. La calibration préalable de la visseuse par rapport à l'objectif a pour but d'avoir un écart le plus faible possible.

La courbe de mesure a typiquement la forme d'une gaussienne, la quasi-totalité des serrages (99,73 % dans les tests effectuées) se situant dans la zone des $6\sigma$.

Pour estimer correctement la précision de l'outil durant un seul serrage (ou sur un nombre limité de serrages), il est nécessaire que tous les défauts soient présents sur la courbe de couple. Or un défaut qui se présente une fois par tour d'arbre de sortie de visseuse ne va pas forcément apparaitre si la vis requière une rotation de 30° pour être serrée. Un angle minimum de rotation de 720° (au moins deux tours pour analyser les basses fréquences) de l'arbre de sortie est souhaitable (obtenu sur un ou, selon la présente invention, plusieurs vissages).

Les perturbations provoquant des variations de couple d'un vissage à l'autre ont diverses origines telles que l'engrènement des dentures ou encore les perturbations électriques des signaux par le champ magnétique du moteur qui génèrent des écarts entre la mesure de couple et le couple réellement appliqué sur la vis.

Ces perturbations se caractérisent par une oscillation de la mesure du couple de l'outil autour de ce que serait la valeur réellement appliquée à la vis si elle était mesurée en temps réel par un capteur placé entre la vis et la visseuse.

Cette oscillation se produit à des fréquences et amplitudes variables dépendantes de l'origine des perturbations.

Dans le cadre de la présente description, on considère par hypothèse que l'amplitude des perturbations est proportionnelle au couple instantané fourni par la visseuse. Ceci a pour conséquence que les dispersions et écarts sont du même niveau quel que soit le couple de serrage.

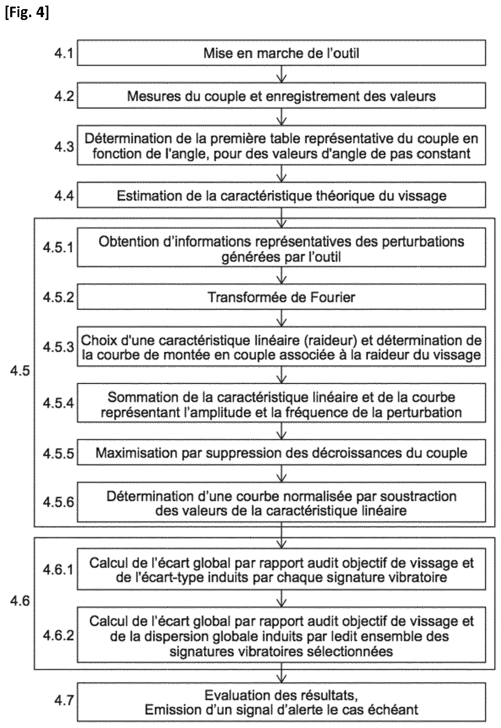

Selon les résultats d'estimation, le procédé, objet de l'invention, comporte une étape d'émission d'un signal d'alerte lorsque le contrôleur 6 détecte que la dispersion ou l'écart par rapport à la consigne des serrages ne répond plus aux exigences de production. Cette alerte répond à des contraintes de qualité, mais également de sécurité. Une alerte peut également être générée lors de la détection d'une amplitude de perturbation anormale d'un composant, en vue par exemple d'effectuer un diagnostic. Ceci peut notamment être restitué sous la forme d'un tableau présentant les dispersions et les écarts pour chaque perturbation, tel qu'expliqué plus en détail par la suite, en relation avec l'étape 4.7 du procédé de la **Fig. 4.**

Il est également possible, lors d'un test de maintenance, d'estimer la dispersion et l'écart à la consigne des serrages de la visseuse pour des raideurs usuelles de test, permettant ainsi un contrôle rapide de l'outil.

On peut noter que cette estimation ne prend pas en compte certains effets de la visseuse telle que l'insuffisance de freinage du moteur au moment de l'atteinte de l'objectif de serrage. Il est en effet peu aisé, et peu utile, de déterminer ce qui se passe après l'arrêt du moteur.

Un des aspects de l'invention consiste à calculer ce que serait la dispersion d'un outil de vissage et son écart moyen par rapport à l'objectif de serrage à partir des perturbations détectées sur le signal produit par son capteur 51 de couple. Cette évaluation peut être réalisée au cours d'un seul serrage effectué sur une chaîne de fabrication par exemple. Cette évaluation est donc beaucoup plus rapide que celle consistant à réaliser un diagnostic nécessitant généralement plusieurs dizaines de serrages sur un banc de test.

Des exemples de procédé de l'invention, pouvant être mis en œuvre sur un microprocesseur et/ou dans un ordinateur, sont décrits ci-après.

*5.3 exemples de procédé de contrôle de vissage*

*5.3.0 Glossaire*

Dans le cadre de la présente description et des revendications :

- « première table » est une table de doublets comprenant chacun une valeur d'angle et une valeur de couple. Une telle première table est représentative de la montée en couple du vissage d'une vis ;
- « deuxième table » est une table contenant une série de valeurs représentative de la caractéristique vraie de la vis en fonction du pas angulaire ;
- « troisième table » est une table de valeurs présentant le couple en fonction de l'angle. Une telle troisième table est représentative des perturbations induites par la visseuse lors de la montée en couple du vissage ;
- « troisième table de vissage unitaire » est une troisième table obtenue à partir d'un vissage donné. Au moins deux troisièmes tables de vissage unitaire sont prises en compte, appelées troisième table d'un premier vissage et troisième table d'un deuxième vissage, selon le procédé selon l'invention ;
- « troisième table de vissage tronquée » est une troisième table de vissage unitaire de laquelle des données relatives à une ou plusieurs mesures sont supprimées ;
- « troisième table intermédiaire » est une troisième table contenant des données issues d'au moins deux troisièmes tables de vissage unitaire et/ou troisièmes tables de vissage tronquées ;
- « troisième table agrégée » est une troisième table contenant des données issues d'au moins deux troisièmes tables de vissage unitaire et/ou troisièmes tables de vissage tronquées comprenant un nombre de valeurs considéré suffisant pour effectuer une analyse des perturbations induites par la visseuse ;
- « troisième table agrégée candidate » ou « troisième table agrégée sélectionnée » est une troisième table sélectionnée parmi au moins deux « troisièmes tables agrégées » selon un critère d'optimisation.

*5.3.1 Première mise en œuvre d'un procédé de contrôle de vissage*

En relation avec la **Fig.4,** une première mise en œuvre va maintenant être décrit. La **Fig. 4** présente un ordinogramme des principales étapes pour la mise en œuvre d'un procédé de contrôle d'un niveau de qualité de vissage d'une visseuse, par rapport à un objectif de vissage prédéterminé, selon un premier exemple de réalisation.

A l'étape 4.1, l'outil, une visseuse par exemple, est mis en marche et effectue un travail selon une recette de vissage par exemple. Au cours du travail, les capteurs mesurent la valeur du couple (capteur 51) et l'angle (capteur 52) en référençant ces mesures par rapport au temps. Les mesures sont prises toutes les millisecondes par exemple (étape 4.2). Les valeurs des capteurs 51 et 52 sont transmises au contrôleur 6.

Le contrôleur 6 enregistre dans sa mémoire les valeurs de mesures et les traite dans le but de produire une table de doublets de valeurs de couple et d'angle en fonction du temps, par exemple à des intervalles de temps prédéterminés. Cette table est appelée « table brute ».

A l'étape 4.3, Le contrôleur détermine une table représentative du couple en fonction de l'angle de vissage, pour des valeurs d'angle de pas constant, pour élaborer une première table de doublets représentative de la montée en couple du vissage d'au moins une vis, chaque doublet comprenant une valeur d'angle et une valeur de couple. Cette étape consiste à :

- déterminer (I) un pas angulaire, qui peut être choisi de façon arbitraire, et par exemple correspondre à un pas moyen se situant entre deux valeurs. Il correspond dans ce dernier cas à l'écart entre l'angle final et l'angle initial, divisé par le nombre de points entre les deux :

$$\Delta\theta = \frac{\theta_n - \theta_0}{n}$$

Ainsi, chaque nouvel angle se calcule de la manière suivante :

$$\theta'_i = i \times \Delta\theta \; ;$$

- Calculer (II) les échantillons de couple pour chaque nouvel angle défini. Pour effectuer ce deuxième calcul (II). Selon une première approche, ce calcul peut mettre en œuvre une interpolation linéaire entre 2 valeurs de couple de la première série :

$$C'_i = C_i + \frac{(C_{i+1} - C_i) \times (\theta'_i - \theta_i)}{\theta_{i+1} - \theta_i}$$

D'autres approches, notamment par interpolation polynomiale de la première série de mesures, sont également utilisables.

A l'issue de l'étape 4.3, le contrôleur 6 établit une série de valeurs S1 qui représente la valeur du couple en fonction du pas angulaire (chaque valeur de couple étant calculés pour des pas angulaires constants).

On obtient ainsi la première table, représentative de la relation :

$$C_{capteur} = f(\alpha)$$

obtenue à partir des doublets représentative de la montée en couple du vissage d'au moins une vis, enregistrés dans la première table. Cette première table permet de s'affranchir de la vitesse de rotation de l'outil qui peut varier durant le vissage.

A l'étape 4.4, la caractéristique théorique de l'assemblage est estimée. Cette étape permet de déterminer une image de la caractéristique vraie de la vis en calculant une caractéristique théorique.

Plusieurs méthodes de traitement numérique (filtrage) sont possibles, tels que :

- régression linéaire appliquée à la table de couples en fonction de l'angle.
- régression polynomiale appliquée à la table de couple en fonction de l'angle.
- filtre passe-bas ayant comme fréquence de coupure la valeur du défaut ayant la fréquence la plus faible. Cette méthode permet que la partie utile des perturbations soit conservée en supprimant notamment les éventuels défauts de la vis, qui peut ne pas être linéaire. A l'issue de cette étape, le contrôleur 6 met à jour une deuxième table contenant une série de valeurs S2 représentative de la caractéristique vraie de la vis en fonction du pas angulaire (à pas d'angle constant), cette série de valeur peut s'exprimer par la formule :

$$C_{caractéristique\ vraie} = g(\alpha)$$

A l'étape 4.5, la part du signal résultant des perturbations générées par l'outil peut être à ce moment isolée et quantifiée. Selon une mise en œuvre, cette étape se décompose en plusieurs sous-étapes :

1°] L'étape 4.5.1 consiste à ne retenir de la première table que les informations représentatives des perturbations générées par l'outil.

Pour le même angle, les valeurs de couple de ladite seconde table sont soustraites aux valeurs de couple correspondantes de la première table. Le résultat de ces soustractions est divisé par les valeurs de couple correspondantes de la seconde table, ceci exprimé en pourcent.

$$\Delta C\% = (f(\alpha) - g(\alpha))/g(\alpha)$$

On détermine ainsi les valeurs de la troisième table.

Dans un deuxième temps, à l'étape 4.5.2, la transformée de Fourrier discrète est calculée sur cette table afin de réaliser une analyse fréquentielle du signal et mettre en évidence les différentes perturbations qui apparaissent sous forme d'une raie caractérisée par une certaine fréquence. Le tableau ci-dessous présente sous la forme d'un exemple des valeurs représentatives de la fréquence et de l'amplitude de chaque perturbation détectée.

| Perturbation | Fréquence | Amplitude |
|:---:|:---:|:---:|
| 1 | f1 | A1 |
| 2 | f2 | A2 |
| ------ | ------ | ------ |
| n | fn | An |

n varie par exemple de 1 à 1000.

On peut noter que selon ce mode de calcul, les erreurs sont considérées comme indépendantes du couple, ou influe peu sur sa valeur.

2°] A la sous-étape 4.5.3, une caractéristique linéaire ayant une raideur déterminée est choisie. Cette raideur est un paramètre d'entrée défini de façon normative, par exemple : angle franc (30°) - angle élastique (360°), ou entre les deux (notamment, cette caractéristique peut être la caractéristique vraie de l'assemblage réel, définie par la deuxième table). L'angle de serrage à simuler $\alpha_{vis}$ est sélectionné.

La dispersion est évaluée pour chaque fréquence fi présente dans le tableau ci-dessus. La table de montée du couple en fonction de l'angle associée à cette raideur s'exprime de la façon suivante :

$$T_R(\alpha) = \frac{\alpha}{\alpha_{vis}} . C_{consigne}$$

où :

- $T_R$ est le couple de la caractéristique linéaire,
- $\alpha_{vis}$ est l'angle total du vissage (de 0% à 100% du couple, en degré),
- $C_{consigne}$ est le couple consigne (en Nm).

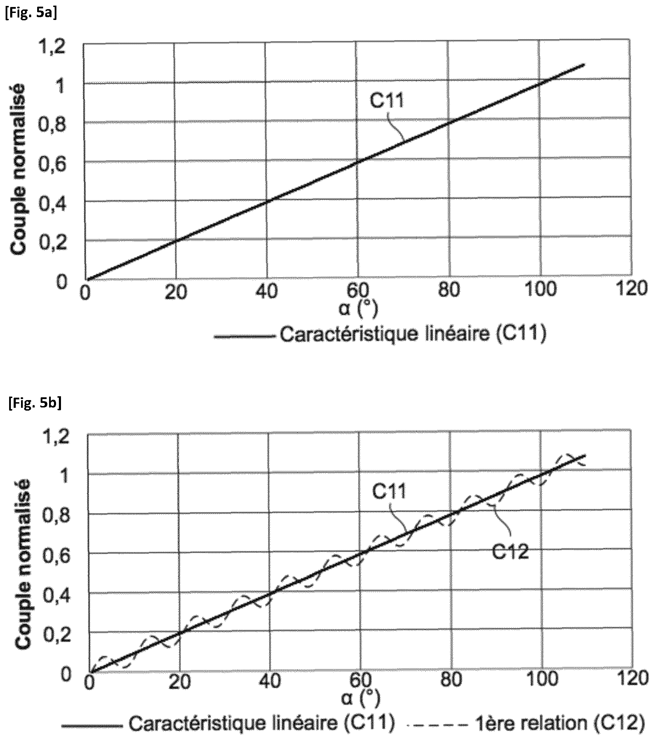

Dans cette mise en œuvre, le couple réel est considéré comme parfait, c'est-à-dire que le couple augmente proportionnellement avec l'angle (**Fig. 5a**). La courbe C11 illustrant cette caractéristique linéaire est un segment de droite dont la pente est fonction de l'angle de serrage. 3°] Lors de la sous-étape 4.5.4, le contrôleur 6 détermine une première relation mathématique Tc obtenue par la somme de la courbe C11 (la caractéristique linéaire) et de la courbe sinusoïdale dont l'amplitude et la fréquence sont celles de la perturbation considérée. Le calcul de cette relation d'ajout de la sinusoïde est mis en œuvre pour chaque perturbation.

Ceci exprime une première relation :

$$T_c(\alpha) = T_R(\alpha) + C_{consigne} . A . \sin(2 . \pi . f . \alpha)$$

où :

- $T_c$ est le couple mesuré par le capteur 5 (en Nm),
- A est l'amplitude relative du défaut par rapport au couple consigne $C_{consigne}$, issue de la FFT (%),
- f est la fréquence de la perturbation (deg-1).

Un exemple de courbe C12 produite par cette première relation mathématique est présenté à la **Fig. 5b.**

4°] A la sous-étape 4.5.5, le contrôleur 6 détermine une seconde relation mathématique, qui exprime le fait que l'arrêt de l'outil ne prend pas en compte les décroissances de couple. Cette seconde relation Ts découle de la première relation et s'exprime de la façon suivante :

$$T_S(\alpha) = \max_{0 \le x \le \alpha} T_c(x)$$

Les valeurs de couple sont maximisées de façon à supprimer les décroissances, produisant ainsi une deuxième relation exprimant un couple en fonction d'un angle. En d'autres termes, Ts est une représentation fictive d'un couple qui va s'en cesse croissant, c'est à dire pour lequel l'arrêt de l'outil ne peut être activé sur une valeur de couple inférieur à une valeur précédemment atteinte lors du travail. Selon cette représentation fictive, l'arrêt de l'outil n'intervient pas lors d'une diminution du couple, mais lors de l'atteinte d'une valeur « maximum ».

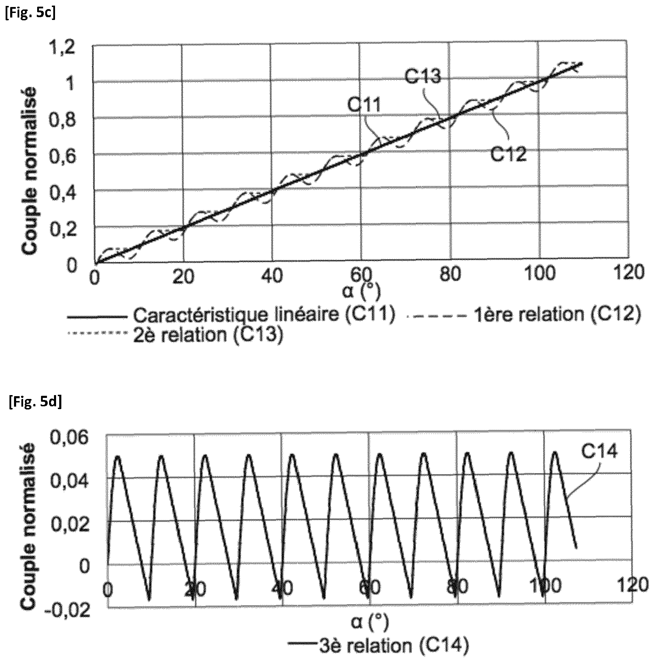

Un exemple de courbe C13 illustrant cette deuxième relation mathématique est présenté à la Fig. 5c.

5°] Lors de la sous-étape 4.5.6, le contrôleur 6 déduit de cette deuxième relation une troisième relation qui correspond à une soustraction, aux valeurs obtenues à l'aide de la deuxième relation, des valeurs correspondantes de la caractéristique linéaire. Cette troisième relation s'exprime mathématiquement de la façon suivante :

$$T_S(\alpha) - T_R(\alpha)$$

La table ainsi obtenue est illustrée par la courbe C14 de la **Fig. 5d.**

Ainsi, à l'issue des cinq étapes 4.5.1 à 4.5.6, qui sont décrites ci-dessous selon un exemple de réalisation, le contrôleur 6 peut déterminer la dispersion et/ou l'écart par rapport à l'objectif résultant de chaque perturbation générée par l'outil (étape 4.6).

Dans un premier temps, à l'étape 4.6.1, le contrôleur 6 évalue l'influence individuelle des perturbations sur la dispersion et/ou l'écart de vissage par rapport à l'objectif.

Selon un cas particulier, lorsque l'on sélectionne la caractéristique linéaire à l'étape 4.5.3, le calcul de la dispersion et de l'écart par rapport à l'objectif s'effectue en considérant une raideur d'assemblage qui peut être choisie indépendamment de la raideur de l'assemblage sur lequel ont été recueillies les valeurs de la première série. Selon une variante de réalisation, plusieurs calculs de dispersions et d'écarts sont effectués en utilisant plusieurs raideurs, par exemple les raideurs normalisées utilisées pour définir un assemblage franc et un assemblage élastique ou une raideur propre à l'application.

Au cours du calcul de la dispersion et l'écart par rapport à l'objectif, les perturbations engendrées par l'outil sont considérées une par une de façon à évaluer pour chaque perturbation, sa contribution à la perturbation globale.

Selon une mise en œuvre, l'évaluation de l'influence individuelle des perturbations sur la dispersion et de l'écart de vissage par rapport à l'objectif s'effectue à l'issue des étapes suivantes :

- calcul de la moyenne de cette différence sur une période. Cette moyenne est représentative de l'écart entre le couple généré par l'outil et l'objectif de couple de serrage. Elle est exprimée de la façon suivante :

$$\bar{x} = C_{consigne} - f \int_0^{\frac{1}{f}} (T_S(\alpha) - T_R(\alpha)) d\alpha$$

- calcul de l'écart-type de cette troisième relation. Cet écart-type est représentatif de la dispersion introduite par la raie sur le couple généré par l'outil. Elle est exprimée de la façon suivante :

$$\sigma = \frac{1}{\bar{x}} \times \sqrt{\int_0^{\frac{1}{f}} \left(T_S(\alpha) - (T_R(\alpha) - C_{consigne} + \bar{x})\right)^2 d\alpha}$$

Ces calculs sont répétés pour chaque valeur de n (la plupart sont proches de 0, et non significatives. Les valeurs plus élevées correspondent à des défauts éventuels. Connaissant les fréquences caractéristiques de chaque élément de l'outil, il est possible de déterminer le ou les éléments défaillants).

Dans un second temps, à l'étape 4.6.2, le contrôleur 6 évalue l'influence de l'ensemble des perturbations sur la dispersion et l'écart de vissage par rapport à l'objectif, ceci pour la ou les raideurs d'assemblage précédemment choisies.

Selon un exemple de réalisation, le calcul s'effectue en réalisant les calculs suivants :

- Les moyennes sont additionnées, et la valeur ainsi calculée est représentative de l'écart entre le couple généré par l'outil et l'objectif de couple de serrage pour l'ensemble des raies et donc des perturbations induites par l'outil. Elle est exprimée de la façon suivante :

$$x_{moy} \geq C_{consigne} - \sum_{i=1}^{n} \left( \overline{x}_i - C_{consigne} \right)$$

Avec i variant de 1 à n, i représentant chacune des perturbations.

- les écart-types sont agrégés pour donner une valeur représentative de la dispersion induite par l'ensemble des raies. Elle est exprimée de la façon suivante (formule 1) :

$$6\sigma \leq \sqrt{\sum_{i=1}^{n} (6\sigma_i)^2}$$

En effet: $\sigma_{X+Y} = \sqrt{\sigma_X^2 + \sigma_Y^2 + 2\sigma_X\sigma_Y\rho(X,Y)}$

Or: $-1 \leq \rho(X,Y) \leq 1$
Donc: $\sigma_X^2 + \sigma_Y^2 + 2\sigma_X\sigma_Y\rho(X,Y) \leq \sigma_X^2 + \sigma_Y^2 + 2\sigma_X\sigma_Y$
Sachant que: $\sigma_X^2 + \sigma_Y^2 + 2\sigma_X\sigma_Y = (\sigma_X+\sigma_Y)^2$
On obtient: $\sigma_{X+Y} \leq \sqrt{\sigma_X^2 + \sigma_Y^2}$

Ce calcul (formule 1) permet donc de vérifier la présence d'une majoration de la dispersion par la somme du carré des dispersions calculées pour chaque défaut.
Selon une mise en œuvre particulière et par sécurité, la valeur obtenue est majorée par rapport à la valeur réelle.
A l'étape 4.7, des tests sont effectués afin de déterminer si la dispersion et l'écart se situent dans une fourchette acceptable et dans le cas contraire, une alerte est émise. Les résultats peuvent être délivrés dans un tableau du type :

| Angle | Dispersion | | Ecart | |
|---|---|---|---|---|
| | Evaluation | Seuil | Evaluation | Seuil |
| 30° | $\sigma_{30}$ | | $\overline{x}_{30}$ | |
| 360° | $\sigma_{360}$ | | $\overline{x}_{360}$ | |
| Angle spécial | $\sigma_{spécial}$ | | $\overline{x}_{spécial}$ | |

A l'aide d'un tel tableau, il est possible d'extraire la dispersion et l'écart pour un angle donné (cas d'un diagnostic, pour une application souhaitée du client, on analyse pour un angle donné. Ceci permet de repérer un éventuel composant défaillant).
Le tableau ci-dessous présente les dispersions et les écarts pour chaque perturbation :

| Perturbation | Dispersion | | Ecart | |
|---|---|---|---|---|
| | Evaluation | Seuil | Evaluation | Seuil |
| 1 | $\sigma_1$ | | $\overline{x}_1$ | |
| 2 | $\sigma_2$ | | $\overline{x}_2$ | |
| ------ | ------ | | ------ | |
| n | $\sigma_n$ | | $\overline{x}_n$ | |

Ce tableau permet l'identification des composants générant une imprécision anormale, chacune des perturbations 1 à n étant associée à l'un de ces composants.

L'exemple de réalisation du procédé de contrôle d'un niveau de qualité du travail d'un outil qui vient d'être décrit dans les pages précédentes est considéré comme le plus précis.

Une autre mise en œuvre va maintenant être décrit sous la forme d'un autre exemple. Cette mise en œuvre décrit une méthode plus simple mais sensiblement moins précise.

*5.3.2 Deuxième mise en œuvre d'un procédé de contrôle de vissage*

Cette autre mise en œuvre n'intègre pas de calcul de FFT et de ce fait n'impose pas de conditions particulières sur l'enregistrement de la table de couple.

Dans un premier temps et de manière identique à la première mise en œuvre, la table de couple exprimée en fonction de l'angle est calculée et enregistrée. Il résulte de cette étape une série de valeurs, formant la première table, et exprimant :

$$C_{capteur} = f(\alpha)$$

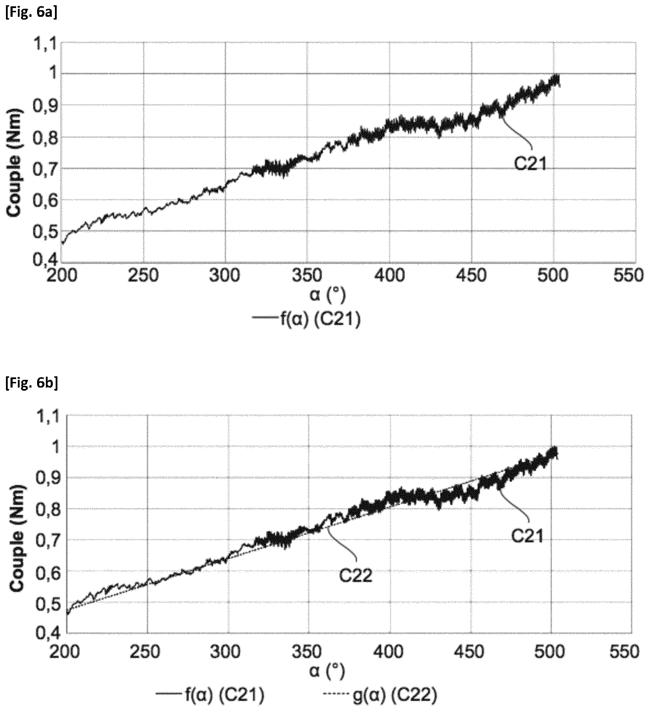

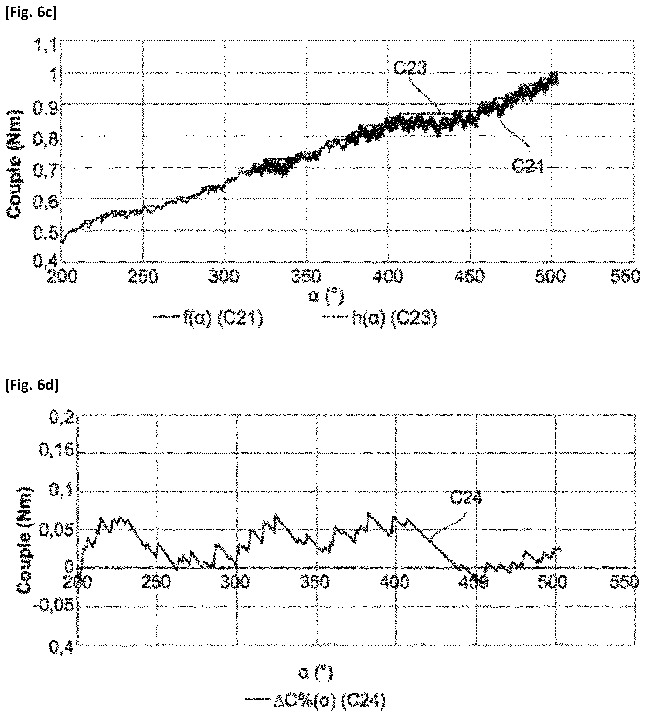

La figure 6.1 illustre un exemple de courbe C21 représentant cette première table.

Dans un deuxième temps et de manière identique à la première mise en œuvre, le contrôleur 6 détermine la caractéristique théorique de la vis, image de la caractéristique vraie. Il résulte de cette étape une série de valeurs, formant la deuxième table, et exprimant :

$$C_{caractéristique\ vraie} = g(\alpha)$$

La figure 6.2 illustre un exemple de courbe C22 représentant cette deuxième table, superposée à la courbe C21.

Dans un troisième temps et de manière différente à la première mise en œuvre, le contrôleur 6 isole la part du signal résultant des perturbations générées par l'outil. Ce troisième temps se décompose en plusieurs étapes :

I] détermination à partir de la table de couple transmise par l'outil en fonction de l'angle, d'une première relation qui exprime le fait que l'arrêt de l'outil ne prend pas en compte les décroissances de couple. La table ainsi déterminée s'exprime de la façon suivante :

$$h(\alpha) = \max_{0 \leq x \leq \alpha} f(x)$$

Avec h($\alpha$( le couple (Nm) calculé par le contrôleur 6 qui traduit qu'un arrêt de l'outil ne peut être activé sur une valeur de couple inférieur à une valeur précédemment atteinte lors du serrage. Comme pour la méthode précédente, l'outil s'arrête toujours au niveau d'un maximum.

La figure 6.3 illustre un exemple de courbe C23 représentant cette table, superposée à la courbe C21.

II] détermination d'une deuxième relation qui exprime les différences entre la première relation et la caractéristique théorique. En d'autres termes, cette deuxième relation fournit en fonction de l'angle la différence entre la table de couple calculée à l'étape précédente et la caractéristique théorique de la vis (deuxième table, S2). Il en résulte une série de valeurs traduisant :

$$\Delta C = h(\alpha) - g(\alpha)$$

III] Détermination d'une troisième relation obtenue en normalisant la deuxième relation par rapport à la caractéristique théorique, cette étape consiste à faire le rapport entre la différence et la caractéristique théorique de la vis. Il en résulte une série de valeurs, constituant la troisième table et traduisant :

$$\Delta C\%(\alpha) = (h(\alpha) - g(\alpha))/g(\alpha)$$

La figure 6d illustre un exemple de courbe C24 représentant cette troisième table.

Dans un quatrième temps, la dispersion et l'écart par rapport à l'objectif résultant de ladite part du signal qui résulte lui-même des perturbations générées par l'outil sont calculés. Cette étape permet de calculer la dispersion et l'écart par rapport à l'objectif de serrage qui sont induits par l'ensemble des perturbations.

La moyenne de cette différence sur la globalité du signal est d'abord calculée. Cette moyenne est représentative de l'écart entre le couple généré par l'outil et l'objectif de couple de serrage. Elle peut s'exprimer par l'équation suivante :

$$\overline{x} = C_{consigne} - \frac{1}{n}\sum_{y=1}^{n} \Delta C\%(y)$$

L'écart-type de cette troisième relation est ensuite calculé. Cet écart-type est représentatif de la dispersion introduite sur le couple mesuré par l'outil. Il peut s'exprimer par l'équation suivante :

$$\sigma = \frac{1}{\overline{x}} \times \sqrt{\frac{1}{n}\sum_{y=1}^{n}\left(\Delta C\%(y) - C_{consigne} + \overline{x}\right)^{2}}$$

où n représente ici tous les points de la mesure effectués pendant le travail de l'outil.

A la différence de la première mise en œuvre dans lequel n'est prise en compte qu'une seule période car elles sont toutes considérées identiques, la deuxième mise en œuvre prend en compte chaque oscillation. Cette seconde méthode présente l'avantage de prendre en considération les disparités éventuelles entre les oscillations.

Dans un cinquième temps et de manière analogue à la première mise en œuvre, les résultats d'évaluation et une alerte éventuelle est/sont émise(s).

Cette deuxième mise en œuvre est cependant sensiblement moins précise car elle ne permet pas de réaliser des résultats pour chaque fréquence de perturbation, et donc de tester chaque composant individuellement.

La présente invention permet ainsi notamment de déterminer si un outil est capable ou non de réaliser le travail qui lui est demandé, en temps réel et sur la chaîne de travail. L'invention peut également être utilisée pour déterminer à la vue des résultats de mesure, si le travail, un vissage par exemple, a été correctement réalisé ou non. Les valeurs caractérisant les perturbations détectées et calculées lors d'un travail avec la pièce produite, il est possible de réaliser un contrôle qualité *a posteriori* des pièces produites et ainsi remettre en cause la qualité de certaines pièces s'il s'avère que l'amplitude des perturbations étaient trop importantes.

Le procédé de l'invention permet notamment de fournir, selon les besoins et les applications, au moins un des éléments suivants :

- une alerte si la dispersion ou l'écart à la consigne des serrages ne répond plus aux exigences de production, ceci éventuellement lors de l'usage de la visseuse en production (aspect qualité / sécurité) ;
- une estimation de la dispersion et un écart à la consigne des serrages de la visseuse pour les raideurs usuelles de test, ceci éventuellement lors d'un test de maintenance (aspect contrôle rapide) ;
- la détection d'une amplitude de perturbation anormale d'un composant et la génération d'une alerte (aspect diagnostic).

L'invention permet ainsi, en particulier :

- de prévenir en temps réel l'utilisateur d'une l'incapacité de la visseuse à réaliser correctement le travail par exemple lors de l'utilisation de l'outil sur chaine d'assemblage ;
- de fournir rapidement, en temps réel, une estimation de la dispersion et l'écart par rapport à un objectif de serrage ;
- de générer une alerte si un composant de la visseuse se dégrade de façon anormale, notamment pour permettre à l'assembleur de l'outil ou au technicien de maintenance d'identifier le ou les composants défaillants.

Bien que décrits à travers un certain nombre d'exemples de réalisation détaillés, le procédé proposé et les dispositifs correspondants comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains dispositifs décrits ci-dessus n'incorporent pas la totalité des modules et fonctions prévus pour les mises en œuvre décrites.

*5.4 modes de réalisation du procédé de l'invention*

Comme indiqué précédemment, un angle minimum de rotation de 720° (au moins deux tours pour analyser les basses fréquences) de l'arbre de sortie est généralement souhaitable. Lorsqu'un vissage unique ne couvre pas cette plage angulaire minimale, il est donc souhaitable de prendre en compte des mesures relevées à partir de deux, ou plus, vissages.

Les données obtenues à partir de ces différents vissages doivent ensuite être combinés, ou concaténés, pour mettre en œuvre la technique décrite ci-dessus, et construire notamment les tables décrites ci-dessus. Cette concaténation ne peut cependant être mise en œuvre sans traitement préalable, la technique décrite ci-dessus prenant en compte la périodicité du signal représenté par les mesures et traitements.

Ainsi, l'invention propose un procédé de contrôle d'un niveau de qualité de vissage d'une visseuse par rapport à un objectif de vissage prédéterminé tenant compte d'une série de données représentatives de la montée en couple d'au moins deux vissages de vis à une fréquence angulaire prédéterminée. Il comprend les étapes suivantes :

- obtention d'une sous-série de données pour chacun desdits vissages, correspondants à une sous-série de mesures ;
- agrégation optimisée desdites sous-séries, pour former ladite série de données, comprenant une étape de suppression de données correspondant à un nombre de mesures déterminé selon un critère d'optimisation de périodicité ; et
- analyse de ladite série de données, délivrant ladite au moins une information représentative d'une dispersion et/ou d'un écart par rapport audit objectif de vissage, résultant de perturbations induites par ladite visseuse.

En d'autres termes, la concaténation, ou l'agrégation, de données issues de deux (ou plus) sous-séries de mesures ne conserve pas toutes les données disponibles, bien que l'objectif premier soit de disposer d'une plage angulaire suffisante. Au contraire, certaines données sont supprimées, de façon que le signal résultant du traitement des données conservées présente des caractéristiques de périodicité efficace pour la détermination des informations de dispersion et/ou d'écart.

Cette suppression a pour but, en substance, de fournir un signal final qui soit le plus périodique possible ou, en d'autres termes, que la liaison entre les deux portions de signal, correspondant aux deux vissages pris en compte, soit le plus linéaire possible (c'est-à-dire que les pentes des deux portions de signal, au niveau de leur jonction, soit les plus proches possibles l'une de l'autre, de façon que cette jonction soit aussi « lisse » que possible, sans introduire de transition brusque qui perturberait l'analyse).

Deux modes de réalisation sont décrits ci-après.

*5.4.1 Premier mode de réalisation de l'invention*

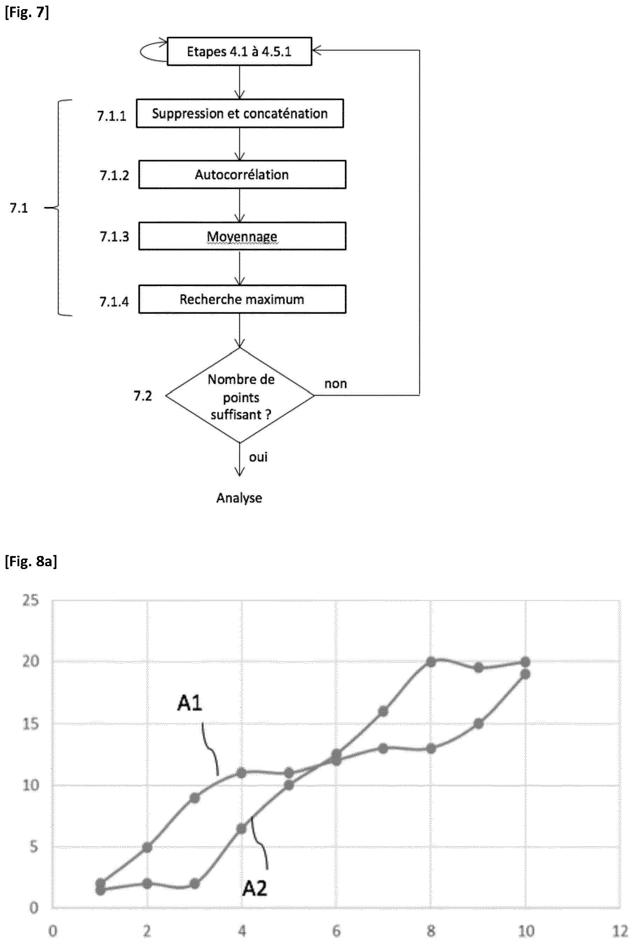

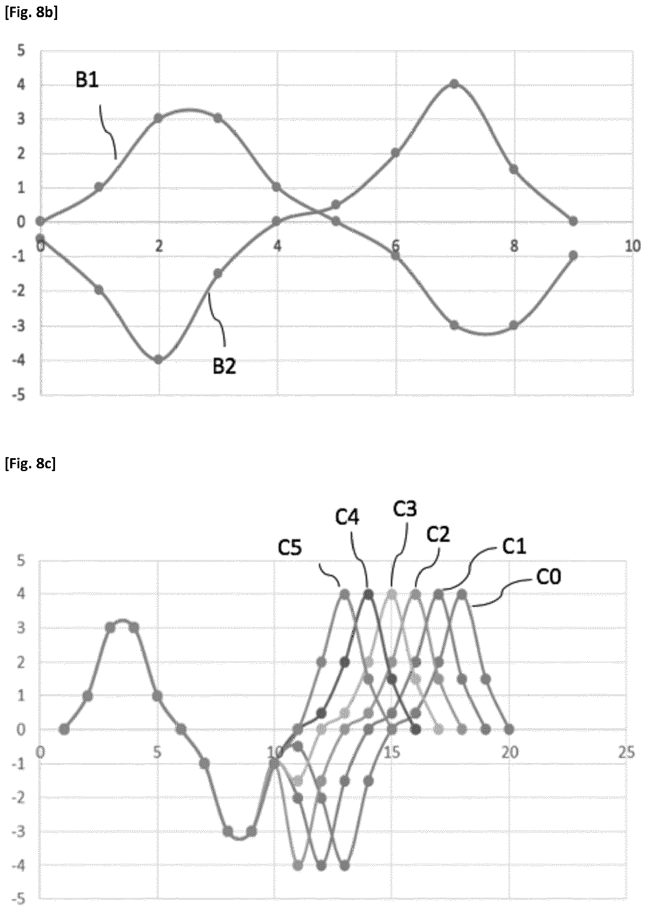

En relation avec la **Fig. 7**, un premier mode de réalisation va maintenant être décrit. La **Fig. 7** présente un ordinogramme des principales étapes pour la mise en œuvre d'un procédé de contrôle d'un niveau de qualité de vissage d'une visseuse, par rapport à un objectif de vissage prédéterminé, selon un troisième exemple de réalisation. Certaines étapes de ce premier mode de réalisation sont par ailleurs illustrées plus avant via les courbes représentées sur les **Fig. 8a**, **Fig. 8b** et **Fig. 8c**.

Plus particulièrement, lors de la mise en œuvre de l'étape 4.3 (selon l'une quelconque des mises en œuvre précitées au paragraphe 5.3), une série de doublets représentative de la montée en couple du vissage d'une première vis vissée par la visseuse de la **Fig. 1** est obtenue (par exemple après mise en œuvre des étapes 4.1 et 4.2 décrites ci-dessus). Chaque doublet comprend une valeur d'angle et une valeur de couple. De la sorte, une première table de valeurs associée au premier vissage est constituée. La première table ainsi obtenue est illustrée par la courbe A1 de la **Fig. 8a**.

Lors de la mise en œuvre de l'étape 4.4 (selon l'une quelconque des mises en œuvre précitées), une deuxième table de valeurs, associée au premier vissage, est déterminée à partir de la première table de valeurs. La deuxième table de valeurs présente le couple en fonction de l'angle, et est représentative de la caractéristique vraie de la première vis.

Lors de la mise en œuvre de l'étape 4.5.1 (selon l'une quelconque des mises en œuvre précitées), une troisième table de valeurs présentant le couple en fonction de l'angle et représentative des perturbations induites par la visseuse lors de la montée en couple du vissage de la première vis, est déterminée à partir des première et deuxième tables. La troisième table associée au premier vissage ainsi obtenue est illustrée par la courbe B1 de la **Fig. 8b**.

Cependant, contrairement aux deux premières mises en œuvre décrites ci-dessus, les étapes 4.3 (par exemple après mise en œuvre des étapes 4.1 et 4.2 décrites ci-dessus), 4.4 et 4.5.1 sont mises en œuvre pour au moins un deuxième vissage de vis par la visseuse. De la sorte, sont obtenues une première table de valeurs associée au deuxième vissage (illustrée par la courbe A2 de la **Fig. 8a**), une deuxième table de valeurs associée au deuxième vissage, ainsi qu'une troisième table associée au deuxième vissage (illustrée par la courbe B2 de la **Fig. 8b**).

En effet, les défauts recherchés sur les mesures sont liés à la visseuse. Ainsi, quand bien même des vis différentes sont vissées, le défaut se retrouve sur les séries de mesures effectuées lors des différents vissages de vis mis en œuvre. Ainsi, afin de pouvoir procéder à une analyse fine des mesures effectuées, par exemple sur la base d'un nombre suffisant de points de mesures, lors d'une étape 7.1, une agrégation optimisée de la troisième table associée au premier vissage et de la troisième table associée au deuxième vissage est mise en œuvre. Une telle agrégation optimisée comprend une suppression, dans la troisième table associée au deuxième vissage, d'un nombre de valeurs déterminé selon un critère d'optimisation de périodicité. Une troisième table agrégée candidate est ainsi délivrée à l'issue de la mise en œuvre de l'étape 7.1.

Plus particulièrement, lors d'une sous-étape 7.1.1, la troisième table associée au premier vissage et une version tronquée de la troisième table associée au deuxième vissage, dite troisième table tronquée, sont concaténées de sorte à former une table agrégée intermédiaire. La troisième table tronquée résulte d'une suppression d'un nombre donné de valeurs successives correspondant à des angles d'amplitude minimale parmi les valeurs de la troisième table associée au deuxième vissage. En d'autres termes, ce sont les premières valeurs de la troisième table associée au deuxième vissage que l'on supprime ici.

Par ailleurs, la suppression, dans la troisième table associée au deuxième vissage, et la concaténation avec la troisième table associée au premier vissage sont répétées pour différentes valeurs du nombre donné de valeurs supprimées. De la sorte un jeu de tables agrégées intermédiaires est obtenu.

Reconsidérant l'exemple des courbes (et vecteurs de valeurs associées) B1 et B2 de la **Fig. 8b** représentant les troisièmes tables associées respectivement au premier et au deuxième vissage, la formule suivante est par exemple utilisée pour obtenir les valeurs de chaque table agrégée intermédiaire (les différentes tables agrégées intermédiaires sont indexées par x ici).

$$\forall\, x\, entier \in \left[0; \frac{longueur B_2}{2}\right], \forall a\, entier \in [1; longueur B_1 + longueur B_2 - x]\,,$$

$$C_x(a) = \begin{cases} B_1(a) \; si \; a \leq longueur\, B_1 \\ B_2(a - longueur\, B_1 + x) \; si \; longueur\, B_1 < a < longueur\, B_1 + longueur\, B2 - x \end{cases}$$

Les courbes C0 à C5 correspondant aux différentes tables agrégées intermédiaires du jeu de tables agrégées intermédiaires obtenu sont représentées sur la **Fig. 8c**.

En termes de valeurs numériques, les valeurs correspondant aux courbes B1 et B2 sont données dans le tableau suivant :

| Échantillon | B1 | B2 |
|---|---|---|
| 1 | 0 | -0,5 |
| 2 | 1 | -2 |
| 3 | 3 | -4 |
| 4 | 3 | -1,5 |
| 5 | 1 | 0 |
| 6 | 0 | 0,5 |
| 7 | -1 | 2 |
| 8 | -3 | 4 |
| 9 | -3 | 1,5 |
| 10 | -1 | 0 |

Les valeurs numériques correspondant aux courbes C0 à C5 sont alors données dans le tableau suivant :

| Échantillon | C0 | C1 | C2 | C3 | C4 | C5 |
|---|---|---|---|---|---|---|
| 1 | 0 | 0 | 0 | 0 | 0 | 0 |
| 2 | 1 | 1 | 1 | 1 | 1 | 1 |
| 3 | 3 | 3 | 3 | 3 | 3 | 3 |
| 4 | 3 | 3 | 3 | 3 | 3 | 3 |
| 5 | 1 | 1 | 1 | 1 | 1 | 1 |
| 6 | 0 | 0 | 0 | 0 | 0 | 0 |
| 7 | -1 | -1 | -1 | -1 | -1 | -1 |
| 8 | -3 | -3 | -3 | -3 | -3 | -3 |
| 9 | -3 | -3 | -3 | -3 | -3 | -3 |
| 10 | -1 | -1 | -1 | -1 | -1 | -1 |
| 11 | -0,5 | -2 | -4 | -1,5 | 0 | 0 |
| 12 | -2 | -4 | -1,5 | 0 | 0,5 | 2 |
| 13 | -4 | -1,5 | 0 | 0,5 | 2 | 4 |
| 14 | -1,5 | 0 | 0,5 | 2 | 4 | 1,5 |
| 15 | 0 | 0,5 | 2 | 4 | 1,5 | 0 |
| 16 | 0,5 | 2 | 4 | 1,5 | 0 | |
| 17 | 2 | 4 | 1,5 | 0 | | |
| 18 | 4 | 1,5 | 0 | | | |
| 19 | 1,5 | 0 | | | | |
| 20 | 0 | | | | | |

En alternative, lors de la sous-étape 7.1.1, la troisième table associée au deuxième vissage et une version tronquée de la troisième table associée au premier vissage, dite troisième table tronquée, sont concaténées de sorte à former la table agrégée intermédiaire. Plus particulièrement, la troisième table tronquée résulte d'une suppression d'un nombre donné de valeurs successives correspondant à des angles d'amplitude maximale parmi les valeurs de la troisième table associée au premier vissage. En d'autres termes, ce sont les dernières valeurs de la troisième table associée au premier vissage que l'on supprime ici.

Par ailleurs, la suppression, dans la troisième table associée au premier vissage, et la concaténation avec la troisième table associée au deuxième vissage sont répétées pour différentes valeurs du nombre donné de valeurs supprimées, délivrant ainsi le jeu de tables agrégées intermédiaires dans cette alternative.

De retour à la **Fig. 7**, Lors d'une sous-étape 7.1.2, une autocorrélation est mise en œuvre pour chaque table agrégée intermédiaire du jeu de tables agrégées intermédiaires précédemment obtenue. De la sorte, un jeu correspondant de tables agrégées intermédiaires autocorrélées est délivré.

Reconsidérant l'exemple des courbes (et vecteurs de valeurs associées) C0 à C5 de la **Fig. 8c**, la formule suivante est par exemple utilisée pour calculer la fonction d'autocorrélation g(y,x) de chaque table agrégée intermédiaire (y est ici l'argument de chaque fonction d'autocorrélation, les différentes tables agrégées intermédiaires C0 à C5 étant indexées par x) :

$\forall$ ***y entier*** $\in$ **[0; *longueur Cx*],**

$$g(y,x) = \frac{\sum_{i=0}^{(longueur\ Cx)-y-1} C_x(i+y) \times C_x(i)}{(longueur\ Cx) - y}$$

En pratique, cette opération consiste à faire la somme de la multiplication terme à terme du vecteur $C_x(i)$ avec une version décalée de la valeur y, $C_x(i+y)$.

Lors d'une sous-étape 7.1.3, chaque table agrégée intermédiaire autocorrélée est moyennée. Ainsi un jeu correspondant de valeurs moyennées est délivré.

Reconsidérant l'exemple des fonctions d'autocorrélation g(y,x) ci-dessus, la formule suivante est par exemple utilisée pour obtenir les valeurs moyennées en question :

$$h(x) = \frac{\sum_{j=1}^{G_x} g(j,x)}{G_x}$$

avec $G_x$ le nombre de valeurs dans le vecteur à moyenner. En termes de valeurs numériques associées aux courbes (et vecteurs de valeurs associées) C0 à C5 de la Fig. 8c, on obtient ainsi :

| x | 0 | 1 | 2 | 3 | 4 | 5 |
|---|---|---|---|---|---|---|
| $h(x)$: | -4,778 | 2,236 | 2,417 | 3,147 | 3,953 | 3,95 |

Ainsi, une table agrégée intermédiaire dont la valeur moyennée correspondante est maximale parmi les valeurs moyennées est sélectionnée comme étant une troisième table agrégée candidate selon le critère d'optimisation de périodicité. Ainsi, la troisième table agrégée candidate correspond à la table agrégée intermédiaire présentant la plus grande régularité (au sens de l'autocorrélation) parmi les différentes tables du jeu de tables agrégées intermédiaires.

De la sorte, les résultats d'une analyse basée par exemple sur une mise en œuvre d'une transformée de Fourier sont améliorées, les discontinuités de la table analysée étant minimisées.

Dans l'exemple ci-dessus, la troisième table agrégée candidate est ainsi la courbe C4 correspondant à $x=4$.

Par ailleurs, lorsque plusieurs tables agrégées intermédiaires ont une valeur moyennée de même valeur maximale parmi l'ensemble des valeurs moyennées, une table agrégée intermédiaire correspondant à la suppression d'un nombre minimal de valeurs successives (lors de la mise en œuvre de la suppression de valeurs dans la troisième table associée au deuxième vissage) est sélectionnée parmi les tables agrégées intermédiaires en question comme étant la troisième table agrégée candidate, ou sélectionnée, selon le critère d'optimisation de périodicité. Ainsi, un nombre maximum de valeurs est obtenu dans la troisième table agrégée candidate de sorte à permettre une meilleure résolution d'analyse de la table en question.

Lors d'une étape 7.2 le nombre total de valeurs de la troisième table agrégée candidate est testé, par exemple par comparaison à un seuil prédéterminé. Par exemple, il est décidé que la troisième table agrégée candidate est la troisième table agrégée lorsque le nombre total de valeurs de la troisième table agrégée candidate est supérieur au seuil prédéterminé. Ainsi, il est considéré que le nombre de valeurs de la troisième table agrégée est suffisant pour pouvoir obtenir une bonne résolution d'analyse des défauts de la visseuse.

Alternativement, lorsque le nombre total de valeurs de la troisième table agrégée candidate est inférieur au seuil prédéterminé, les étapes 4.3 (par exemple après mise en œuvre des étapes 4.1 et 4.2 décrites ci-dessus), 4.4 et 4.5.1 (selon l'une quelconque des mises en œuvre précitées) sont de nouveau mises en œuvre pour un nouveau vissage de vis par la visseuse. Une nouvelle troisième table correspondante est ainsi délivrée. Sur cette base, l'étape 7.1 d'agrégation optimisée (selon l'un quelconque des modes de réalisation précités) est à nouveau appliquée à la troisième table agrégée candidate et la nouvelle troisième table. Une nouvelle troisième table agrégée candidate est ainsi délivrée. Ainsi, lorsque le nombre de valeurs de la troisième table agrégée n'est pas suffisant pour pouvoir effectuer une analyse fine des défauts de la visseuse, une nouvelle agrégation optimisée est mise en œuvre de manière itérative dans le but d'obtenir un nombre de valeurs suffisant pour une analyse fine des résultats.

Dans certains modes de réalisation, la nouvelle troisième table agrégée candidate fait l'objet d'un nouveau test sur le nombre des valeurs qu'elle contient selon une nouvelle mise en œuvre de l'étape 7.2 telle que décrite ci-dessus.

Dans certains modes de réalisation, l'étape 7.2 n'est pas mise en œuvre et l'analyse est effectuée systématiquement sur la troisième table agrégée candidate obtenue à partir de la concaténation optimisée de valeurs mesurées lors d'un nombre prédéterminé de vissages (par exemple deux vissages, trois vissages, etc.). Dans ces modes de réalisation, la troisième table agrégée candidate obtenue après la mise en œuvre de l'étape 7.1 un nombre de fois correspondant au nombre prédéterminé en question est systématiquement la troisième table agrégée.

De retour à la Fig. 7, la troisième table agrégée est analysée de manière à délivrer au moins une information représentative d'une dispersion et/ou d'un écart par rapport à l'objectif de vissage, résultant de perturbations induites par la visseuse. Par exemple, une telle analyse est implémentée selon la technique décrite ci-dessus en relation avec les première (cf. étapes 4.5.2, 4.5.3, 4.5.4, 4.5.5, 4.5.6, 4.6, selon l'une quelconque des mises en œuvre précitées) et deuxième mises en œuvre du procédé du paragraphe 5.3.

*5.4.2 Deuxième mode de réalisation de l'invention*

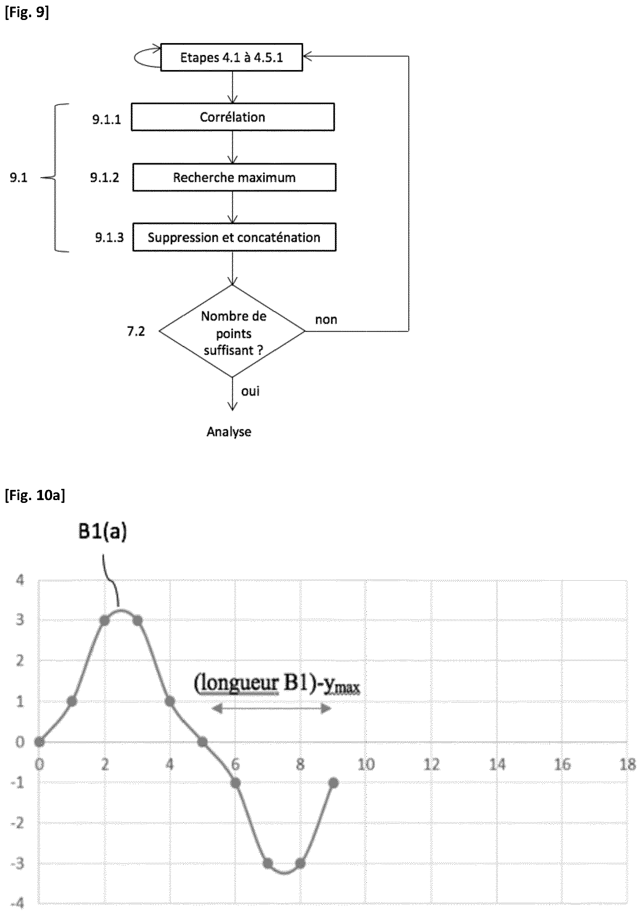

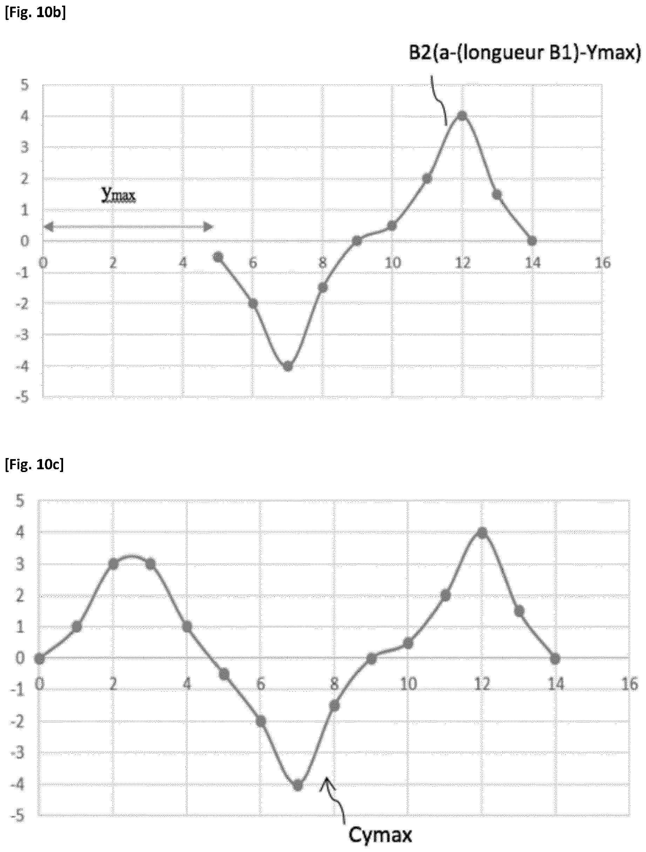

En relation avec la **Fig. 9**, un deuxième mode de réalisation va maintenant être décrit. La **Fig. 9** présente un ordinogramme des principales étapes pour la mise en œuvre d'un procédé de contrôle d'un niveau de qualité de vissage d'une visseuse, par rapport à un objectif de vissage prédéterminé, selon un quatrième exemple de réalisation. Certaines étapes de ce deuxième mode de réalisation sont par ailleurs illustrées plus avant via les courbes représentées sur les **Fig. 10a, Fig. 10b** et **Fig. 10c.**

Le premier mode de réalisation décrit précédemment donne de très bons résultats. Cependant, le calcul de l'autocorrélation est assez couteux en charge de calcul ainsi qu'en mémoire. Le deuxième mode de réalisation permet de limiter la charge de calculs au prix de résultats légèrement moins bons. De tels résultats sont cependant suffisants dans beaucoup de cas pratiques.

Tout comme dans le premier mode de réalisation décrit ci-dessus, selon le deuxième mode de réalisation, les étapes 4.3 (par exemple après mise en œuvre des étapes 4.1 et 4.2), 4.4 et 4.5.1 sont mises en œuvre pour au moins un premier et un deuxième vissage de vis par la visseuse. Ainsi deux premières tables de valeurs associées respectivement au premier et au deuxième vissage, deux deuxièmes tables de valeurs associées au premier et au deuxième vissage et deux troisièmes tables associées au premier et au deuxième vissages sont obtenues.

Afin de pouvoir procéder à une analyse fine des mesures effectuées, par exemple sur la base d'un nombre suffisant de points de mesures, lors d'une étape 9.1, une agrégation optimisée de la troisième table associée au premier vissage et de la troisième table associée au deuxième vissage est mise en œuvre. Une telle agrégation optimisée comprend une suppression, dans la troisième table associée au deuxième vissage, d'un nombre de valeurs déterminé selon un critère d'optimisation de périodicité. Une troisième table agrégée candidate est délivrée à l'issue de la mise en œuvre de l'étape 9.1.

Pour se faire, lors d'une sous-étape 9.1.1, une corrélation est calculée entre, d'une part, la troisième table associée au premier vissage et, d'autre part, la troisième table associée au deuxième vissage. Une fonction de corrélation est ainsi délivrée.

Reconsidérant l'exemple des courbes (et vecteurs de valeurs associées) B1 et B2 de la **Fig. 8b** décrite ci-dessus et représentant les troisièmes tables associées respectivement au premier et au deuxième vissage, la formule suivante est par exemple utilisée pour obtenir la fonction de corrélation en question (y est ici l'argument de la fonction de corrélation) :

$$g(y) = \frac{\sum_{i=0}^{(longueur\ B_1)-y-1} B_1(i+y) \times B_2(i)}{(longueur\ B_1) - y}$$

Selon une telle formule, la longueur de B1 doit être inférieure ou égale à la longueur de B2. En pratique, il est toujours possible d'intervertir le rôle de B1 et de B2 le cas échéant afin de satisfaire une telle condition.

Lors d'une sous-étape 9.1.2, une valeur d'argument ymax (correspondant en pratique à un angle de rotation de la visseuse) maximisant la fonction de corrélation g(y) est déterminée. Le critère d'optimisation de périodicité correspond dans ce cas à la suppression, dans la troisième table associée au premier vissage, d'un nombre de valeurs successives, dit nombre optimisé, fonction de la valeur d'argument maximisant la fonction de corrélation g(y).

Par ailleurs, lorsque plusieurs valeurs d'arguments maximisent la fonction de corrélation g(y), le nombre optimisé est fonction d'une valeur d'argument maximale parmi les valeurs d'arguments maximisant la fonction de corrélation g(y). Ainsi, un nombre maximum de valeurs est obtenu dans la troisième table agrégée de sorte à permettre une meilleure résolution d'analyse de la table en question.

Dans des variantes, la recherche de la ou des valeurs d'arguments maximisant la fonction de corrélation g(y) est limitée à l'intervalle $y \in [\frac{longueur B_1}{2}$ ; *longueurB*$_1$[ de sorte à ne supprimer au maximum que la moitié des valeurs de la troisième table associée au premier vissage.

Lors d'une sous-étape 9.1.3, une version tronquée de la troisième table associée au premier vissage et la troisième table associée au deuxième vissage sont concaténées de sorte à délivrer une troisième table agrégée candidate. La troisième table tronquée résulte d'une suppression, dans la troisième table associée au premier vissage, du nombre optimisé de valeurs successives correspondant à des arguments d'amplitude maximale parmi les valeurs de la troisième table associée au premier vissage. En d'autres termes, ce sont les dernières valeurs de la troisième table associée au premier vissage que l'on supprime ici.

Par exemple, reconsidérant l'exemple des courbes (et vecteurs de valeurs associées) B1 et B2 de la Fig. 8b, la troisième table agrégée candidate correspond à la courbe (et au vecteur de valeurs associées) Cymax définie par :

$$C_{y_{max}}(a) = \begin{cases} B_1(a) \text{ si } a \leq (longueur\ B_1) - y_{max} \\ B_2(a - (longueur\ B_1) - y_{max})\ sinon \end{cases}$$

Les différentes courbes correspondantes, i.e. B1(a), B2(a-(longueur B1)-Ymax) et Cymax sont représentées respectivement sur les **Fig. 10a, Fig. 10b** et **Fig. 10c.**

Le présent deuxième mode de réalisation comprend également l'étape 7.2 (selon l'un quelconque des modes de réalisation précités) de test du nombre total de valeurs de la troisième table agrégée candidate et/ou d'analyse (selon l'un quelconque des modes de réalisation précités) telles que décrites ci-dessus en relation avec le premier mode de réalisation du procédé selon l'invention.

Dans certains modes de réalisation, l'étape 7.2 n'est pas mise en œuvre et l'analyse est effectuée systématiquement sur la troisième table agrégée candidate obtenue à partir de la concaténation optimisée de valeurs mesurées lors d'un nombre prédéterminé de vissages (par exemple deux vissages, trois vissages, etc.). Dans ces modes de réalisation, la troisième table agrégée candidate obtenue après la mise en œuvre de l'étape 9.1 un nombre de fois correspondant au nombre prédéterminé en question est systématiquement la troisième table agrégée.

## Revendications

1. Procédé de contrôle d'un niveau de qualité de vissage d'une visseuse par rapport à un objectif de vissage prédéterminé comprenant les étapes suivantes :

   - obtention (4.3), à une fréquence angulaire prédéterminée, d'une série de doublets représentative de la montée en couple du vissage d'au moins une vis vissée par ladite visseuse, constituant une première table de valeurs, chaque doublet comprenant une valeur d'angle et une valeur de couple ;
   - détermination (4.4), à partir de ladite première table de valeurs, d'une deuxième table de valeurs présentant le couple en fonction de l'angle, et représentative de la caractéristique vraie de l'au moins une vis ; et
   - détermination (4.5.1) d'une troisième table de valeurs présentant le couple en fonction de l'angle et représentative des perturbations induites par ladite visseuse lors de la montée en couple du vissage d'au moins une vis, à partir des première et deuxième tables ;
   dans lequel lesdites étapes d'obtention (4.3) d'une série de doublets, de détermination (4.4) d'une deuxième table et de détermination (4.5.1) d'une troisième table sont mises en œuvre pour au moins un premier et un deuxième vissages de vis par ladite visseuse, délivrant au moins deux troisièmes tables correspondantes, dites troisièmes tables de vissage unitaire,
   caractérisé
   **en ce qu'il** comprend une étape d'agrégation optimisée (7.1, 9.1) d'au moins deux desdites troisièmes tables de vissage unitaire, comprenant une étape de suppression (7.1.1, 9.1.3), dans au moins l'une desdites troisième tables de vissage unitaire, d'un nombre de valeurs déterminé selon un critère d'optimisation de périodicité, ladite étape d'agrégation optimisée délivrant une troisième table agrégée candidate,
   **et en ce qu'**il comprend une étape d'analyse d'une troisième table agrégée (4.5.2, 4.5.3, 4.5.4, 4.5.5, 4.5.6, 4.6) tenant compte de ladite troisième table agrégée candidate, délivrant au moins une information représentative d'une dispersion et/ou d'un écart par rapport audit objectif de vissage, résultant de perturbations induites par ladite visseuse.

2. Procédé selon la revendication 1 dans lequel ladite étape d'agrégation optimisée comprend une concaténation (7.1.1) d'une part, d'une troisième table d'un premier vissage et, d'autre part, d'une version tronquée d'une troisième table du deuxième vissage, dite troisième table tronquée, délivrant une table agrégée intermédiaire ladite troisième table tronquée résultant d'une suppression, dans ladite troisième table du deuxième vissage, d'un nombre donné de valeurs successives correspondant à des angles d'amplitude minimale parmi les valeurs de ladite troisième table du deuxième vissage ladite suppression, dans ladite troisième table du deuxième vissage, et ladite concaténation répétée pour différentes valeurs dudit nombre donné délivrant un jeu de tables agrégées intermédiaires comprenant ladite troisième table agrégée candidate.

3. Procédé selon la revendication 1 dans lequel ladite étape d'agrégation optimisée comprend une concaténation (7.1.1), d'une part, d'une version tronquée d'une troisième table du premier vissage, dite troisième table tronquée et, d'autre part, d'une troisième table du deuxième vissage, délivrant une table agrégée intermédiaire, ladite troisième table tronquée résultant d'une suppression, dans ladite troisième table du premier vissage, d'un nombre donné de valeurs successives correspondant à des angles d'amplitude maximale parmi les valeurs de ladite troisième table du premier vissage, ladite suppression, dans ladite troisième table du premier vissage, et ladite concaténation répétée pour différentes valeurs dudit nombre donné délivrant un jeu de tables agrégées intermédiaires comprenant ladite troisième table agrégée candidate.

**4.** Procédé selon la revendication 2 ou 3 dans lequel ladite étape d'agrégation optimisée comprend :

- une autocorrélation (7.1.2) de chaque table agrégée intermédiaire dudit jeu de tables agrégées intermédiaires délivrant un jeu correspondant de tables agrégées intermédiaires autocorrélées ; et
- un moyennage (7.1.3) de chacune desdites tables agrégées intermédiaires autocorrélées délivrant un jeu correspondant de valeurs moyennées,

une table agrégée intermédiaire dont la valeur moyennée correspondante est maximale parmi lesdites valeurs moyennées étant sélectionnée comme étant ladite troisième table agrégée candidate selon ledit critère d'optimisation de périodicité.

**5.** Procédé selon la revendication 4 dans lequel, lorsque plusieurs tables agrégées intermédiaires, dites tables agrégées intermédiaires candidates, ont une valeur moyennée de même valeur maximale parmi lesdites valeurs moyennées, une table agrégée intermédiaire correspondant à la suppression d'un nombre minimal de valeurs successives, lors de la mise en œuvre de ladite suppression dans ladite troisième table du deuxième vissage, est sélectionnée parmi lesdites tables agrégées intermédiaires candidates comme étant la troisième table agrégée candidate selon ledit critère d'optimisation de périodicité.

**6.** Procédé selon la revendication 1 dans lequel ladite étape d'agrégation optimisée comprend :

- une corrélation (9.1.1) entre, d'une part, ladite troisième table du premier vissage et, d'autre part, ladite troisième table du deuxième vissage, délivrant une fonction de corrélation ; et
- une détermination (9.1.2) d'au moins une valeur d'angle maximisant ladite fonction de corrélation,

ledit critère d'optimisation de périodicité correspondant à la suppression, dans ladite troisième table du premier vissage, d'un nombre de valeurs successives, dit nombre optimisé, tenant compte d'une valeur d'angle parmi ladite ou lesdites valeurs d'angles maximisant ladite fonction de corrélation.

**7.** Procédé selon la revendication 6 dans lequel, lorsque plusieurs valeurs d'angles maximisent ladite fonction de corrélation, ledit nombre optimisé est fonction d'une valeur d'angle maximale parmi lesdites valeurs d'angles maximisant ladite fonction de corrélation.

**8.** Procédé selon la revendication 6 ou 7 dans lequel ladite étape d'agrégation optimisée comprend une concaténation (9.1.3) entre, d'une part, une version tronquée de ladite troisième table du premier vissage, dite troisième table tronquée et, d'autre part, ladite troisième table du deuxième vissage, ladite concaténation délivrant une troisième table agrégée candidate,
ladite troisième table tronquée résultant d'une suppression, dans ladite troisième table du premier vissage, dudit nombre optimisé de valeurs successives correspondant à des angles d'amplitude maximale parmi les valeurs de ladite troisième table du premier vissage.

**9.** Procédé selon la revendication 4 ou 5 ou 8 comprenant un test (7.2) du nombre total de valeurs de ladite troisième table agrégée candidate,
et dans lequel il est décidé que ladite troisième table agrégée candidate est ladite troisième table agrégée lorsque ledit nombre total de valeurs de ladite troisième table agrégée candidate est supérieur à un seuil prédéterminé.

**10.** Procédé selon la revendication 4 ou 5 ou 8 ou 9 comprenant, lorsque ledit nombre total de valeurs de ladite troisième table agrégée candidate est inférieur audit seuil prédéterminé :

- une nouvelle mise en œuvre desdites étapes d'obtention (4.3) d'une série de doublets, de détermination (4.4) d'une deuxième table et de détermination (4.5.1) d'une troisième table pour un nouveau vissage de vis par ladite visseuse, délivrant une nouvelle troisième table correspondante ; et
- une nouvelle mise en œuvre de ladite étape d'agrégation optimisée (7.1, 8.1) entre ladite troisième table agrégée candidate et ladite nouvelle troisième table, délivrant une nouvelle troisième table agrégée candidate.

11. Produit programme d'ordinateur comprenant des instructions de code de programme pour la mise en œuvre du procédé de contrôle selon l'une quelconque des revendications 1 à 10, lorsque ledit programme est exécuté par un microprocesseur et/ou sur un ordinateur.

12. Visseuse mettant en œuvre le procédé selon l'une quelconque des revendications 1 à 10, et comprenant au moins un organe rotatif susceptible de générer des perturbations sur le couple appliqué à une vis, ladite visseuse comprenant des moyens de contrôle (55) d'un niveau de qualité de vissage, par rapport à un objectif de vissage prédéterminé, mis en œuvre durant le vissage d'au moins une vis et comprenant :

- des moyens d'obtention, à une fréquence angulaire prédéterminée, d'une série de doublets représentative de la montée en couple du vissage d'au moins une vis, constituant une première table de valeurs, chaque doublet comprenant une valeur d'angle et une valeur de couple ;
- des moyens de détermination, à partir de ladite première table de valeurs, d'une deuxième table de valeurs présentant le couple en fonction de l'angle et représentative de la caractéristique vraie de l'au moins une vis ; et
- des moyens de détermination d'une troisième table de valeurs présentant le couple en fonction de l'angle et représentative des perturbations induites par ladite visseuse lors de la montée en couple du vissage d'au moins une vis, à partir des première et deuxième tables ;

dans laquelle lesdits moyens d'obtention d'une série de doublets, de détermination d'une deuxième table et de détermination d'une troisième table sont configurés pour être mis en œuvre pour au moins un premier et un deuxième vissages de vis par ladite visseuse, délivrant au moins deux troisièmes tables correspondantes, dites troisièmes tables de vissage unitaire, et **caractérisée en ce qu'**elle comprend :

- des moyens d'agrégation optimisée desdites troisième tables de vissage unitaire comprenant des moyens de suppression, dans au moins l'une desdites troisième tables, d'un nombre de valeurs déterminé selon un critère d'optimisation de périodicité, lesdits moyens d'agrégation optimisée délivrant une troisième table agrégée candidate ;
- des moyens d'analyse d'une troisième table agrégée tenant compte de ladite troisième table agrégée candidate, délivrant au moins une information représentative d'une dispersion et/ou d'un écart par rapport audit objectif de vissage, résultant de perturbations induites par ladite visseuse.

**Patentansprüche**

1. Verfahren zur Kontrolle eines Qualitätsniveaus der Verschraubung eines Schraubers in Bezug auf ein vorbestimmtes Verschraubungsziel, das die folgenden Schritte umfasst:

- Erhalten (4.3) einer Reihe von Wertepaaren, die repräsentativ sind für den Anstieg des Drehmoments der Verschraubung von mindestens einer von dem Schrauber verschraubten Schraube, mit einer vorbestimmten Winkelfrequenz, die eine erste Wertetabelle bilden, wobei jedes Wertepaar einen Winkelwert und einen Drehmomentwert umfasst;
- Bestimmen (4.4) einer zweiten Wertetabelle, die das Drehmoment in Abhängigkeit vom Winkel darstellt und repräsentativ für die wahre Kennlinie mindestens einer Schraube ist, auf Grundlage der ersten Wertetabelle; und
- Bestimmen (4.5.1) einer dritten Wertetabelle, die das Drehmoment in Abhängigkeit vom Winkel darstellt und repräsentativ für Störungen ist, die beim Anstieg des Drehmoments mindestens einer Schraube durch den Schrauber hervorgerufen werden, auf Grundlage der ersten und zweiten Tabelle;
wobei die Schritte des Erhaltens (4.3) einer Reihe von Wertepaaren, des Bestimmens (4.4) einer zweiten Tabelle und des Bestimmens (4.5.1) einer dritten Tabelle für mindestens eine erste und eine zweite Verschraubung der Schraube durch den Schrauber umgesetzt werden und mindestens zwei dritte entsprechende Tabellen liefern, dritte Tabellen der einheitlichen Verschraubung genannt,
**dadurch gekennzeichnet,**
**dass** es einen Schritt des optimierten Aggregierens (7.1., 9.1.) von mindestens zwei der dritten Tabellen der einheitlichen Verschraubung umfasst, der einen Schritt des Unterdrückens (7.1.1, 9.1.3) einer bestimmten Anzahl von Werten umfasst, die nach einem Periodizitätsoptimierungskriterium in mindestens einer der dritten Tabellen der einheitlichen Verschraubung bestimmt wird, wobei der Schritt des optimierten Aggregierens eine dritte aggregierte Kandidatentabelle ergibt,
und **dass** es einen Schritt des Analysierens einer dritten aggregierten Tabelle (4.5.2, 4.5.3, 4.5.4, 4.5.5, 4.5.6, 4.6) umfasst, der die dritte aggregierte Kandidatentabelle berücksichtigt, die mindestens eine Information liefert, die für eine Streuung und/oder eine Abweichung in Bezug auf das Verschraubungsziel repräsentativ ist, die zu durch den Schrauber hervorgerufenen Störungen führen.

2. Verfahren nach Anspruch 1, wobei der Schritt des optimierten Aggregierens ein Verketten (7.1.1) einer dritten Tabelle einer ersten Verschraubung einerseits und einer abgekürzten Version einer dritten Tabelle der zweiten Verschraubung, dritte abgekürzte Tabelle genannt, andererseits umfasst und eine aggregierte Zwischentabelle liefert, wobei sich die dritte abgekürzte Tabelle aus einer Unterdrückung einer bestimmten Anzahl aufeinanderfolgender Werte, die unter den Werten der dritten Tabelle der zweiten Verschraubung Winkeln einer Minimalamplitude entsprechen, in der dritten Tabelle der zweiten Verschraubung ergibt, und das wiederholte Verketten für verschiedene Werte der bestimmten Anzahl einen Satz aggregierter Zwischentabellen liefert, der die dritte aggregierte Kandidatentabelle umfasst.

3. Verfahren nach Anspruch 1, wobei der Schritt des optimierten Aggregierens ein Verketten (7.1.1) einer abgekürzten Version einer dritten Tabelle der ersten Verschraubung, dritte abgekürzte Tabelle genannt, einerseits und einer dritten Tabelle der zweiten Verschraubung andererseits umfasst und eine aggregierte Zwischentabelle liefert, wobei sich die dritte abgekürzte Tabelle aus einer Unterdrückung einer bestimmten Anzahl aufeinanderfolgender Werte, die unter den Werten der dritten Tabelle der ersten Verschraubung Winkeln einer Maximalamplitude entsprechen, in der dritten Tabelle der ersten Verschraubung ergibt, wobei die Unterdrückung in der dritten Tabelle der ersten Verschraubung und das wiederholte Verketten für verschiedene Werte der bestimmten Anzahl einen Satz aggregierter Zwischentabellen liefert, der die dritte aggregierte Kandidatentabelle umfasst.

4. Verfahren nach Anspruch 2 oder 3, wobei der Schritt des optimierten Aggregierens umfasst:

- ein Autokorrelieren (7.1.2) jeder aggregierten Zwischentabelle des Satzes aggregierter Zwischentabellen, das einen entsprechenden Satz autokorrelierter aggregierter Zwischentabellen liefert; und
- ein Mitteln (7.1.3) jeder der autokorrelierten aggregierten Zwischentabellen, das einen entsprechenden Satz gemittelter Werte liefert,

wobei eine aggregierte Zwischentabelle, deren entsprechender gemittelter Wert unter den gemittelten Werten maximal ist, nach dem Periodizitätsoptimierungskriterium als dritte aggregierte Kandidatentabelle ausgewählt wird.

5. Verfahren nach Anspruch 4, wobei, wenn mehrere aggregierte Zwischentabellen, aggregierte Kandidatenzwischentabellen genannt, einen gemittelten Wert vom selben Maximalwert unter den gemittelten Werten haben, eine aggregierte Zwischentabelle, die der Unterdrückung einer minimalen Anzahl aufeinanderfolgender Werte entspricht, bei der Umsetzung der Unterdrückung in der dritten Tabelle der zweiten Verschraubung unter den aggregierten Kandidatenzwischentabellen nach dem Periodizitätsoptimierungskriterium als dritte aggregierte Kandidatentabelle ausgewählt wird.

6. Verfahren nach Anspruch 1, wobei der Schritt des optimierten Aggregierens umfasst:

- ein Korrelieren (9.1.1) zwischen der dritten Tabelle der ersten Verschraubung einerseits und der dritten Tabelle der zweiten Verschraubung andererseits, das eine Korrelationsfunktion liefert; und
- ein Bestimmen (9.1.2) mindestens eines Winkelwertes, der die Korrelationsfunktion maximiert,

wobei das Periodizitätsoptimierungskriterium, das der Unterdrückung einer Anzahl aufeinanderfolgender Werte in der dritten Tabelle der ersten Verschraubung, optimierte Anzahl genannt, entspricht, einen Winkelwert unter dem oder den Winkelwerten berücksichtigt, der die Korrelationsfunktion maximiert.

7. Verfahren nach Anspruch 6, wobei, wenn mehrere Winkelwerte die Korrelationsfunktion maximieren, die optimierte Anzahl von einem maximalen Winkelwert unter den Winkelwerten abhängig ist, der die Korrelationsfunktion maximiert.

8. Verfahren nach Anspruch 6 oder 7, wobei der Schritt des optimierten Aggregierens ein Verketten (9.1.3) zwischen einer abgekürzten Version der dritten Tabelle der ersten Verschraubung, dritte abgekürzte Tabelle genannt, einerseits und der dritten Tabelle der zweiten Verschraubung andererseits umfasst, wobei das Verketten eine dritte aggregierte Kandidatentabelle liefert, wobei die dritte abgekürzte Tabelle aus einer Unterdrückung der optimierten Anzahl aufeinanderfolgender Werte in der dritten Tabelle der ersten Verschraubung resultiert, die unter den Werten der dritten Tabelle der ersten Verschraubung maximalen Winkelamplituden entsprechen.

9. Verfahren nach Anspruch 4 oder 5 oder 8, das einen Test (7.2) der Gesamtanzahl von Werten der dritten aggregierten Kandidatentabelle umfasst,
und wobei entschieden wird, dass die dritte aggregierte Kandidatentabelle die dritte aggregierte Tabelle ist, wenn die Gesamtanzahl von Werten der dritten aggregierten Kandidatentabelle höher als ein vorbestimmter Schwellenwert ist.

10. Verfahren nach Anspruch 4 oder 5 oder 8 oder 9, das Folgendes umfasst, wenn die Gesamtanzahl von Werten der dritten aggregierten Kandidatentabelle niedriger als der vorbestimmte Schwellenwert ist:

    - ein erneutes Umsetzen der Schritte des Erhaltens (4.3.) einer Reihe von Wertepaaren, des Bestimmens (4.4.) einer zweiten Tabelle und des Bestimmens (4.5.1) einer dritten Tabelle für eine neue Verschraubung von Schrauben durch den Schrauber, das eine neue entsprechende dritte Tabelle liefert; und
    - ein erneutes Umsetzen des Schrittes des optimierten Aggregierens (7.1., 8.1) zwischen der dritten aggregierten Kandidatentabelle und der neuen dritten Tabelle, das eine neue dritte aggregierte Kandidatentabelle liefert.

11. Computerprogrammprodukt, das Programmcodeanweisungen für die Umsetzung des Verfahrens zur Kontrolle nach einem der Ansprüche 1 bis 10 umfasst, wenn das Programm durch einen Mikroprozessor und/oder auf einem Computer ausgeführt wird.

12. Schrauber, der das Verfahren nach einem der Ansprüche 1 bis 10 umsetzt und mindestens ein Drehorgan umfasst, das dazu geeignet ist, Störungen des an einer Schraube aufgebrachten Drehmoments zu erzeugen, wobei der Schrauber Mittel zur Kontrolle (55) eines Qualitätsniveaus der Verschraubung in Bezug auf ein vorbestimmtes Verschraubungsziel umfasst, die während der Verschraubung mindestens einer Schraube umgesetzt wird, und umfassend:

    - Mittel zum Erhalten einer Reihe von Wertepaaren, die repräsentativ für den Anstieg des Drehmoments der Verschraubung mindestens einer Schraube sind und die eine erste Wertetabelle bilden, mit einer vorbestimmten Winkelfrequenz, wobei jedes Wertepaar einen Winkelwert und einen Drehmomentwert umfasst;
    - Mittel zum Bestimmen einer zweiten Wertetabelle, die das Drehmoment in Abhängigkeit vom Winkel darstellt und repräsentativ für die wahre Kennlinie mindestens einer Schraube ist, auf Grundlage der ersten Wertetabelle; und
    - Mittel zum Bestimmen einer dritten Wertetabelle, die das Drehmoment in Abhängigkeit von Winkel darstellt und repräsentativ für die Störungen ist, die beim Anstieg des Drehmoments der Verschraubung mindestens einer Schraube hervorgerufen werden, auf Grundlage der ersten und der zweiten Tabelle;

wobei die Mittel zum Erhalten einer Reihe von Wertepaaren, zum Bestimmen einer zweiten Tabelle und zum Bestimmen einer dritten Tabelle dazu konfiguriert sind, bei mindestens einer ersten und einer zweiten Verschraubung von Schrauben durch den Schrauber umgesetzt zu werden, und mindestens zwei entsprechende Tabellen, dritte Tabellen der einheitlichen Verschraubung genannt, liefern, und die **dadurch gekennzeichnet ist, dass** sie umfasst:

    - Mittel zum optimierten Aggregieren der dritten Tabellen der einheitlichen Verschraubung, die Mittel zum Unterdrücken einer bestimmten Anzahl von Werten, die nach einem Periodizitätsoptimierungskriterium bestimmt werden, in mindestens einer der dritten Tabellen umfassen, wobei die Mittel zum optimierten Aggregieren eine dritte aggregierte Kandidatentabelle liefern;
    - Mittel zum Analysieren einer dritten aggregierten Tabelle unter Berücksichtigung der dritten aggregierten Kandidatentabelle, die mindestens eine Information liefern, die für eine Streuung und/oder eine Abweichung in Bezug auf das Verschraubungsziel repräsentativ ist, die sich aus den durch den Schrauber hervorgerufenen Störungen ergeben.

## Claims

1. Method for checking a level of screwing quality of a screwdriver against a predetermined screwdriving target comprising the following steps:

    - obtaining (4.3), at a predetermined angular frequency, a series of doublets that is representative of the rise in torque of the screwing of at least one screw screwed by said screwdriver, constituting a first table of values, each doublet comprising an angle value and a torque value;

- determining (4.4), from said first table of values, a second table of values showing the torque as a function of the angle, and representative of the true characteristic of the at least one screw; and
- determining (4.5.1) a third table of values presenting the torque as a function of the angle and representative of the disturbances induced by said screwdriver during the rise in torque of the screwing of at least one screw, on the basis of the first and second tables;

wherein said steps of obtaining (4.3) a series of doublets, of determining (4.4) a second table and of determining (4.5.1) a third table are implemented for at least a first and a second screwing of screws by said screwdriver, producing at least two corresponding third tables, referred to as unit third screwdriving tables,

**characterised in that** it comprises a step of carrying out optimised aggregation (7.1, 9.1) of at least two of said unit third screwdriving tables, comprising a step of deleting (7.1.1, 9.1.3), from at least one of said unit third screwdriving tables, a number of values that is determined according to a periodicity optimisation criterion, said optimised aggregation step producing a candidate aggregate third table,

and **in that** it comprises a step of analysing an aggregate third table (4.5.2, 4.5.3, 4.5.4, 4.5.5, 4.5.6, 4.6) taking account of said candidate aggregate third table, producing at least one item of information representative of a dispersion and/or of a deviation from said screwing target, resulting from disturbances induced by said screwdriver.

2. Method according to claim 1, wherein said optimised aggregation step comprises concatenating (7.1.1), on the one hand, a third table of a first screwing operation and, on the other hand, a truncated version of a third table of the second screwing operation, referred to as the truncated third table, producing an intermediate aggregate table,

said truncated third table resulting from a deletion, from said third table of the second screwing operation, of a given number of successive values corresponding to angles of minimum amplitude among the values of said third table of the second screwing operation,

said deletion, from said third table of the second screwing operation, and said concatenation repeated for different values of said given number producing a set of intermediate aggregate tables comprising said candidate aggregate third table.

3. Method according to claim 1, wherein said optimised aggregation step comprises concatenating (7.1.1), on the one hand, a truncated version of a third table of the first screwing operation, referred to as a truncated third table, and, on the other hand, a third table of the second screwing operation, producing an intermediate aggregate table,

said truncated third table resulting from a deletion, from said third table of the first screwing operation, of a given number of successive values corresponding to angles of maximum amplitude among the values of said third table of the first screwing operation,

said deletion, from said third table of the first screwing operation, and said concatenation repeated for different values of said given number producing a set of intermediate aggregate tables comprising said candidate aggregate third table.

4. Method according to claim 2 or 3, wherein said optimised aggregation step comprises:

- an autocorrelation (7.1.2) of each intermediate aggregate table of said set of intermediate aggregate tables producing a corresponding set of autocorrelated intermediate aggregate tables; and
- an averaging (7.1.3) of each of said autocorrelated intermediate aggregate tables producing a corresponding set of averaged values,

an intermediate aggregate table having the maximum corresponding averaged value among said averaged values being selected as being said candidate aggregate third table according to said periodicity optimisation criterion.

5. Method according to claim 4 wherein, when a plurality of intermediate aggregate tables, referred to as candidate intermediate aggregate tables, have an averaged value of the same maximum value among said averaged values, an intermediate aggregate table corresponding to the deletion of a minimum number of successive values, when implementing said deletion from said third table of the second screwing operation, is selected among said candidate intermediate aggregate tables as being the candidate aggregate third table according to said periodicity optimisation criterion.

6. Method according to claim 1, wherein said optimised aggregation step comprises:

- performing a correlation (9.1.1) between, on the one hand, said third table of the first screwing operation and, on the other hand, said third table of the second screwing operation, producing a correlation function; and
- determining (9.1.2) at least one angle value maximising said correlation function,

said periodicity optimisation criterion corresponding to the deletion, from said third table of the first screwing operation, of a number of successive values, referred to as an optimised number, taking account of an angle value among said one or more angle values maximising said correlation function.

7. Method according to claim 6 wherein, when a plurality of angle values maximise said correlation function, said optimised number is a function of a maximum angle value among said angle values maximising said correlation function.

8. Method according to claim 6 or 7, wherein said optimised aggregation step comprises a concatenating (9.1.3) between, on the one hand, a truncated version of said third table of the first screwing operation, referred to as a truncated third table, and, on the other hand, said third table of the second screwing operation, said concatenation producing a candidate aggregate third table,
said truncated third table resulting from a deletion, from said third table of the first screwing operation, of said optimised number of successive values corresponding to angles of maximum amplitude among the values of said third table of the first screwing operation.

9. Method according to claim 4, 5 or 8, comprising testing (7.2) the total number of values of said candidate aggregate third table,
and wherein it is decided that said candidate aggregate third table is said aggregate third table when said total number of values of said candidate aggregate third table is greater than a predetermined threshold.

10. Method according to claim 4, 5, 8 or 9 comprising, when said total number of values of said candidate aggregate third table is less than said predetermined threshold:

- implementing again said steps of obtaining (4.3) a series of doublets, of determining (4.4) a second table and of determining (4.5.1) a third table for a new screwing of screws by said screwdriver, producing a corresponding new third table; and
- implementing again said optimised aggregation step (7.1, 8.1) between said candidate aggregate third table and said new third table, producing a new candidate aggregate third table.

11. Computer program product comprising program code instructions for implementing the method of checking according to any one of claims 1 to 10, when said program is executed by a microprocessor and/or on a computer.

12. Screwdriver implementing the method according to any one of claims 1 to 10, and comprising at least one rotary member capable of generating disturbances to the torque applied to a screw, said screwdriver comprising means for checking (55) a level of screwing quality, against a predetermined screwing target, implemented during the screwing of at least one screw, and comprising:

- means for obtaining, at a predetermined angular frequency, a series of doublets that is representative of the rise in torque of the screwing of at least one screw, constituting a first table of values, each doublet comprising an angle value and a torque value;
- means for determining, from said first table of values, a second table of values showing the torque as a function of the angle, and representative of the true characteristic of the at least one screw; and
- means for determining a third table of values presenting the torque as a function of the angle and representative of the disturbances induced by said screwdriver during the rise in torque of the screwing of at least one screw, on the basis of the first and second tables;

wherein said means for obtaining a series of doublets, of determining a second table and of determining a third table are configured to be implemented for at least a first and a second screwing of screws by said screwdriver, producing at least two corresponding third tables, referred to as unit third screwdriving tables, and **characterised in that** it comprises:

- means for carrying out optimised aggregation of said unit third screwdriving tables, comprising means for deleting, from at least one of said third tables, a number of values that is determined according to a periodicity optimisation criterion, said optimised aggregation means producing a candidate aggregate third table;
- means for analysing an aggregate third table taking account of said candidate aggregate third table, producing at least one item of information representative of a dispersion and/or of a deviation from said screwing target, resulting from disturbances induced by said screwdriver.

[Fig. 1]

[Fig. 2]

[Fig. 3]

[Fig. 4]

| 4.1 | Mise en marche de l'outil |
|---|---|

| 4.2 | Mesures du couple et enregistrement des valeurs |
|---|---|

| 4.3 | Détermination de la première table représentative du couple en fonction de l'angle, pour des valeurs d'angle de pas constant |
|---|---|

| 4.4 | Estimation de la caractéristique théorique du vissage |
|---|---|

**4.5**

| 4.5.1 | Obtention d'informations représentatives des perturbations générées par l'outil |
|---|---|

| 4.5.2 | Transformée de Fourier |
|---|---|

| 4.5.3 | Choix d'une caractéristique linéaire (raideur) et détermination de la courbe de montée en couple associée à la raideur du vissage |
|---|---|

| 4.5.4 | Sommation de la caractéristique linéaire et de la courbe représentant l'amplitude et la fréquence de la perturbation |
|---|---|

| 4.5.5 | Maximisation par suppression des décroissances du couple |
|---|---|

| 4.5.6 | Détermination d'une courbe normalisée par soustraction des valeurs de la caractéristique linéaire |
|---|---|

**4.6**

| 4.6.1 | Calcul de l'écart global par rapport audit objectif de vissage et de l'écart-type induits par chaque signature vibratoire |
|---|---|

| 4.6.2 | Calcul de l'écart global par rapport audit objectif de vissage et de la dispersion globale induits par ledit ensemble des signatures vibratoires sélectionnées |
|---|---|

| 4.7 | Evaluation des résultats, Emission d'un signal d'alerte le cas échéant |
|---|---|

[Fig. 5a]

Caractéristique linéaire (C11)

[Fig. 5b]

Caractéristique linéaire (C11)  ----- 1ère relation (C12)

[Fig. 5c]

Caractéristique linéaire (C11)  ----- 1ère relation (C12)
········· 2è relation (C13)

[Fig. 5d]

——3è relation (C14)

[Fig. 6a]

[Fig. 6b]

[Fig. 6c]

[Fig. 6d]

[Fig. 7]

[Fig. 8a]

[Fig. 8b]

[Fig. 8c]

[Fig. 9]

[Fig. 10a]

[Fig. 10b]

B2(a-(longueur B1)-Ymax)

[Fig. 10c]

Cymax

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2882287
- FR 3088229
- EP 0264034 A2